# EUROPEAN PATENT SPECIFICATION

(11) **EP 4 394 620 B1**
(45) Date of publication and mention of the grant of the patent: **06.08.2025**
(21) Application number: 22874687.1
(22) Date of filing: 19.09.2022
(51) Int. Cl.: G06F 16/29, G06F 16/909

(54) **METHOD FOR REALIZING NETWORK DYNAMIC GEOGRAPHIC INFORMATION SERVICE AND APPARATUS FOR REALIZING DIFFERENT NETWORK DYNAMIC GEOGRAPHIC INFORMATION SERVICES**
VERFAHREN ZUR REALISIERUNG EINES DYNAMISCHEN GEOGRAFISCHEN NETZWERKINFORMATIONSDIENSTES UND VORRICHTUNG ZUR REALISIERUNG VERSCHIEDENER DYNAMISCHER GEOGRAFISCHER NETZWERKINFORMATIONSDIENSTE
PROCÉDÉ POUR RÉALISER UN SERVICE D'INFORMATIONS GÉOGRAPHIQUES DYNAMIQUES DE RÉSEAU ET APPAREIL POUR RÉALISER DIFFÉRENTS SERVICES D'INFORMATIONS GÉOGRAPHIQUES DYNAMIQUES DE RÉSEAU

(30) Priority: 30.09.2021 CN 202111164523
(43) Date of publication of application: 03.07.2024
(73) Proprietor: Chengdu Jouav Automation Tech Co., Ltd., Chengdu, Sichuan 610095 (CN)
(72) Inventor: LIU, Hang, Chengdu, Sichuan 610095 (CN); HAN, Dan, Chengdu, Sichuan 610095 (CN); MEI, Hualong, Chengdu, Sichuan 610095 (CN); LIN, Xingyuan, Chengdu, Sichuan 610095 (CN); YUAN, Rui, Chengdu, Sichuan 610095 (CN); REN, Xinyi, Chengdu, Sichuan 610095 (CN)
(74) Representative: Ipside
(86) International application number: PCT/CN2022/119593
(87) International publication number: WO 2023/051300

(56) References cited:
- CN-A- 106 294 876
- CN-A- 106 294 876
- CN-A- 107 070 978
- CN-A- 107 070 978
- CN-A- 114 186 003
- CN-B- 103 700 054
- US-A1- 2003 074 358
- US-A1- 2007 276 816
- US-A1- 2007 276 816

## Description

### TECHNICAL FIELD

The present disclosure relates to the field of web dynamic geographic information service, in particular to a method for realizing a web dynamic geographic information service, and devices for realizing different web dynamic geographic information services.

### BACKGROUND

Along with the development of image data collection and applications thereof, a real-time geographic information system is highly demanded. Compared with a conventional geographic information system, the real-time geographic information system has a real-time data collection interface. From the perspective of a geographic information database, it is able to automatically achieve such functions as adding, deleting, checking and modifying data in real time.

In order to function the real-time geographic information system, a method for dynamically updating a data service is required. However, it is difficult to automatically and dynamically update geographic information data through such a static data protocol as Web Map Service (WMS), Web Feature Service (WFS) or Web Coverage Service (WCS). In the related art, merely a dynamic presentation layer and a dynamic application layer, rather than a dynamic data layer, are achieved, so based on a scheme in the related art, it is impossible to achieve a dynamic map service for such applications as a Digital Orthophoto Map (DOM) and a video real-time vector generated through stitching videos in real time, and raster AR. In the conventional geographic information system, a real-time data modification function is provided, however it fails to provide B/S architecture where a frontend is decoupled from a backend. That is to say, the presentation layer, the application layer and the data layer are coupled together. The application merely runs on a single computer, rather than being deployed in a distributed manner, so it is impossible to maintain a loose relationship between a service provider and a user.

CN10070978, NORTH CHINA INSTITUTE OF COMPUTING TECH, 18 August 2017 relates to proxying Web map services across networks, that includes a proxy server forwarding GetCapabilities requests sent by a client to a WMS server and receiving a metadata description document from the WMS server. US2007276816, (SAMPLE JOHN T, 29 November 2007 relates to a computer-based method for identifying internet web pages containing documents that comply with a predetermined XML schemaCN106294876, ZHEJIANG KELAN INF TECH CO LTD, 4 January 2017, relates to establishing a mapping relation file of three-dimensional (3D) geometric model data and texture surface data. 3D scene data is formatted by using a standard open grid format process to establish a grid index. 3D data-objects are implemented in the grid index. US2003074358, SARBAZ SIAMAK, 17 April 2003, relates o integration of data from disparate sources including the use of data drivers to import the data from the sources into a common data model. and a user, thereby to facilitate the distributed deployment, extension and update of the service.

### SUMMARY

The present invention is set out by the independent claims.

### DESCRIPTION OF THE DRAWINGS

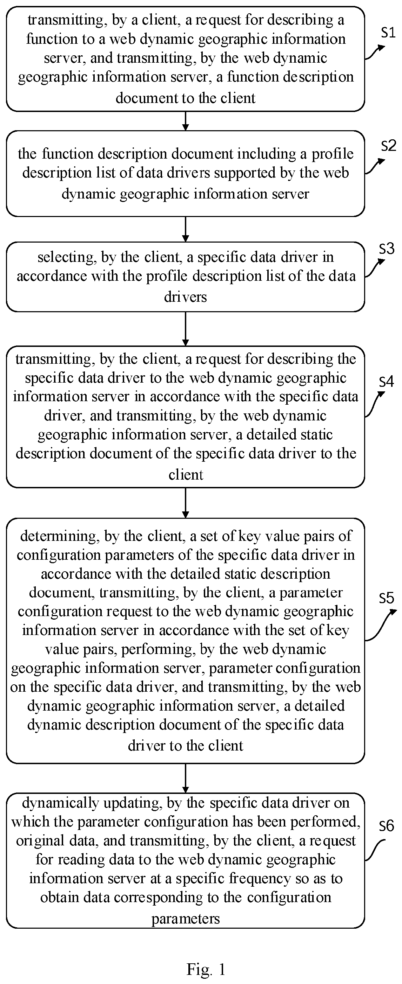

Fig. 1 is a flow chart of a method for realizing a web dynamic geographic information service according to one embodiment of the present disclosure;
Fig. 2 is a flow chart of a method for realizing a web dynamic map service according to a first embodiment of the present disclosure;
Fig. 3 is a flow chart of a method for realizing a web dynamic feature service according to a second embodiment of the present disclosure;
Fig. 4 is a flow chart of a method for realizing a web dynamic map service according to a third embodiment of the present disclosure;
Fig. 5 is a flow chart of a method for realizing a web dynamic coverage service according to a fourth embodiment of the present disclosure; and
Fig. 6 is a flow chart of a method for realizing a web dynamic map service according to a fifth embodiment of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

### Definitions about abbreviations and key terms

Open Geospatial Consortium (OGC): as a non-profit international organization for standardization, it formulates a series of standards for geospatial data and services thereof. The interoperability of the geospatial data is ensured when these standards are adopted by GIS manufacturers.

Full Motion Video (FMV): video data in which geospatial information is carried on metadata and which is encoded and transmitted synchronously with image data. Through the metadata, it is able to achieve seamless conversion between an image space and geospatial coordinates.

Map: a pattern or image for selectively representing several phenomena of the earth (or other planets) on a plane or a spherical surface in a two-dimensional or multi-dimensional manner in accordance with a certain rule. It has a strict foundation of mathematics, a symbol system and text notes. It is used to, on the basis of a map generalization principle, scientifically reflect distribution features of a natural phenomenon and a socioeconomic phenomenon as well as a relationship therebetween. In addition, it is a visual image of the geospatial data, rather than the geospatial data itself.

Digital Orthophoto Map (DOM): an image dataset (database) stored in the form of raster data and formed through scanning an aerospace photo or a remote-sensing image (monochromatic or color image), subjecting the photo or image to radiative correction, differential rectification and mosaicking pixel by pixel, clipping the photo or image into image data in accordance with a range of a topographic map, and adding information about geographic features onto an image plane in the form of symbols, lines, notes, grids and map border decorations (inside or outside).

Web Service (WS): as a platform-independent, low-coupling, self-contained and programmable Web-based application, it uses an open Extensive Markup Language (XML, a subset of Standard Generalized Markup Language (SGML) to describe, release, discover, coordinate and configure applications, so as to develop distributed, interactive applications. XML+HTTP is a foundation platform of WS, where HTTP is the most commonly used Internet protocol, and XML is a language for different platforms and programming languages.

Common Gateway Interface (CGI): it is a specification for an external application when a Web server runs, and when an application is programmed in accordance with the CGI, it is able to extend a function of the server. A CGI application is capable of interacting with a browser, and communicating with an external data source, e.g., a database server, through a data API to obtain data from the database server. The data is transmitted to the browser after being formatted into an HTML document, and the data obtained from the browser is transmitted to a database. Almost all servers support the CGI, and the CGI is programmed using any language, e.g., C, C++, Java, VB, Delphi, etc.

Web Map Service (WMS): a set of standard HTTP interfaces are defined, so as to transmit map image data including geographic positioning through one or more pieces of geospatial data, and return image data in the format of JPEG or PNG for display on a web page or a desktop client. Three principal operations are defined. GetCapabilities is used to return service-level metadata and describe contents of service information and required parameters thereof, and this operation must be implemented by the server. GetMap is used to return a map image, a geospatial parameter and a size thereof are well-defined, and this operation must be implemented by the server. GetFeatureInfo is used to return information about some special features to be displayed on a map, and this operation is implemented selectively by the server.

Web Feature Service (WFS): a set of standard HTTP interfaces are defined, so as to transmit vector feature data and return feature-level Geographic Markup Language (GML) codes, and implement such transaction operations as addition, modification and deletion on features. It allows the client to obtain, from a plurality of feature services, geospatial data encoded using GML. It mainly includes the following operations. GetCapabilites is used to return service metadata described using XML. DescribeFeatureType is used to return an XML document for describing any feature structure capable of providing a service. GetFeature is used to process a request for obtaining a feature instance. Transaction is used to process a transaction request. LockFeature is used to process a request for locking one or more feature instances within the duration of one transaction.

Web Coverage Service (WCS): a set of standard HTTP interfaces and operations are defined, so as to provide and obtain a spatial raster data-oriented, sharable web map original data service. It mainly includes three kinds of operations. GetCapabilities is used to return a metadata document about datasets and services described using XML. GetCoverage is executed after query and data are determined through GetCapabilities, and used to return coverage data in a common output format. DescribeCoverage is used to allow the client to request for complete description about any coverage data provided by a specific WCS server.

Styled Layer Descriptor (SLD): as a rule for a set of descriptors of layer style, it is used to describe a user-defined map appearance into a series of layer styles encoded using XML. It includes an XML element named StyledLayerDescriptor, and this element includes a series of named layers and corresponding named styles.

MapServer: it is open-source WebGIS software developed by University of Minnesota and National Aeronautics and Space Administration (NASA). As a WebGIS solution, MapServer is object-oriented, and APIs for basic profiles MapFile and MapScript are organized on the basis of objects. MapServer supports several standards formulated by OGC, so as to support distribution and interoperability. MapServer supports various platforms, e.g., Windows, UNIX and Linux. MapServer itself is an application programmed using C programming language, and two kinds of development modes are provided, one on the basis of CGI, and the other on the basis of MapScript. MapServer may be considered as a general name of two independent modules, i.e., MapServer CGI module and MapScript module, and a WebGIS program is encoded using any module at a server side. MapScript supports PHP, Perl, Python, Java, C#, etc.

Geospatial Data Abstraction Library (GDAL): as an open-source raster spatial conversion database under an X/MIT license, it uses an abstraction data model to express various supported file formats.

### First Embodiment

In a conventional WMS protocol, it is impossible to represent a map data driver or a map dynamic data source, and meet the requirements on configuration and start/stop when the map data driver runs. In addition, for an application for stitching videos in real time, it is necessary to decouple a presentation layer, an application layer and a data layer from each other, and at this time, a huge amount of computing resources need to be consumed.

In order to solve the above-mentioned problems, in the embodiments of the present disclosure, program units which consume a huge amount of computing resources are deployed and operated on a backend server, and the presentation layer merely for data presentation is operated on a frontend browser, so as to form B/S architecture, and facilitate the deployment of an application in a distributed manner. The present disclosure provides in some embodiments a method and a device for realizing a web dynamic map service (WDMS), and the device includes a WDMS server and a client.

The WDMS is extended on the basis of a WMS, i.e., the WDMS is used to realize the HTTP interfaces for the operations GetCapabilities, GetMap and GetFeatureInfo defined in the WMS, and optionally, HTTP interfaces for operations DescribeLayer (for indicating a WFS or WCS to retrieve the other information about the relevant layers), GetLegendGraphic (for retrieving a legend of a map), GetStyles (for requesting a layer style) and PutStyles (for setting a layer style) defined in an SLD WMS (in an SLD standard, a user is allowed to modify a map appearance of a map image, and the SLD WMS is an option function of OGC WMS), Further, the WDMS is used to realize HTTP interfaces for operations DescribeDriver, GetDriver and PutDriver. In addition, the WDMS also needs to provide a profile description list of map data drivers in a service function description document returned through GetCapabilities, so as to facilitate the subsequent operations DescribeDriver, GetDriver and PutDriver.

### (1) GetCapabilities (mandatory)

Function description: obtaining a function document (in an XML format by default).

### Reserved characters:

| Request parameter | Mandatory/optional | Description |
|---|---|---|
| SERVICE=WDMS \| WMS | mandatory | Service name: generally, WDMS; compatibly, WMS. |
| VERSION=version | optional | Version Number: WDMS 1.0.0 by default, or compatibly WMS 1.1.1 by default. |
| The other request parameters, including but not limited to REQUEST, are known in a WMS standard and thus omitted herein. | | |

Standard response: a service function description document in an XML format is returned by default.

This service function description document is obtained through extending a service function description document returned through GetCapabilites in the WMS, and a part of contents known in the service function description document in the WMS may refer to http://schemas.opengis.net/wms/1.1.1/capabilities_1_1_0.xml.

For the three additional operations DescribeDriver, GetDriver and PutDriver of the WDMS relative to the WMS, the extended XML description contents are provided as follows.

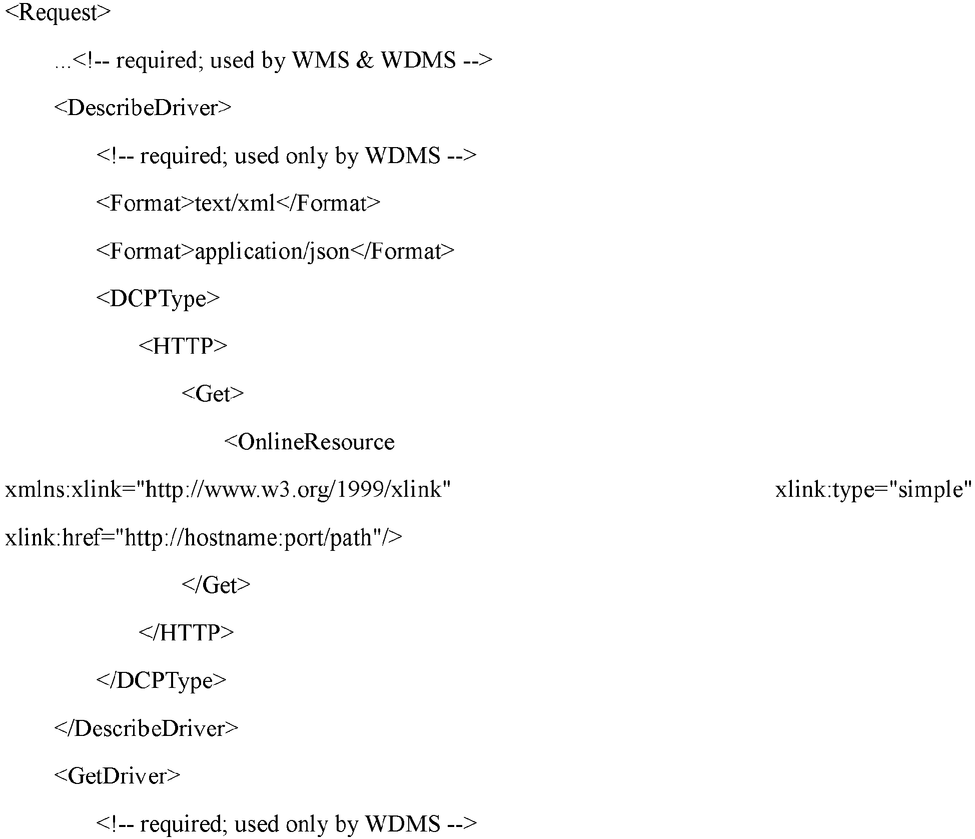

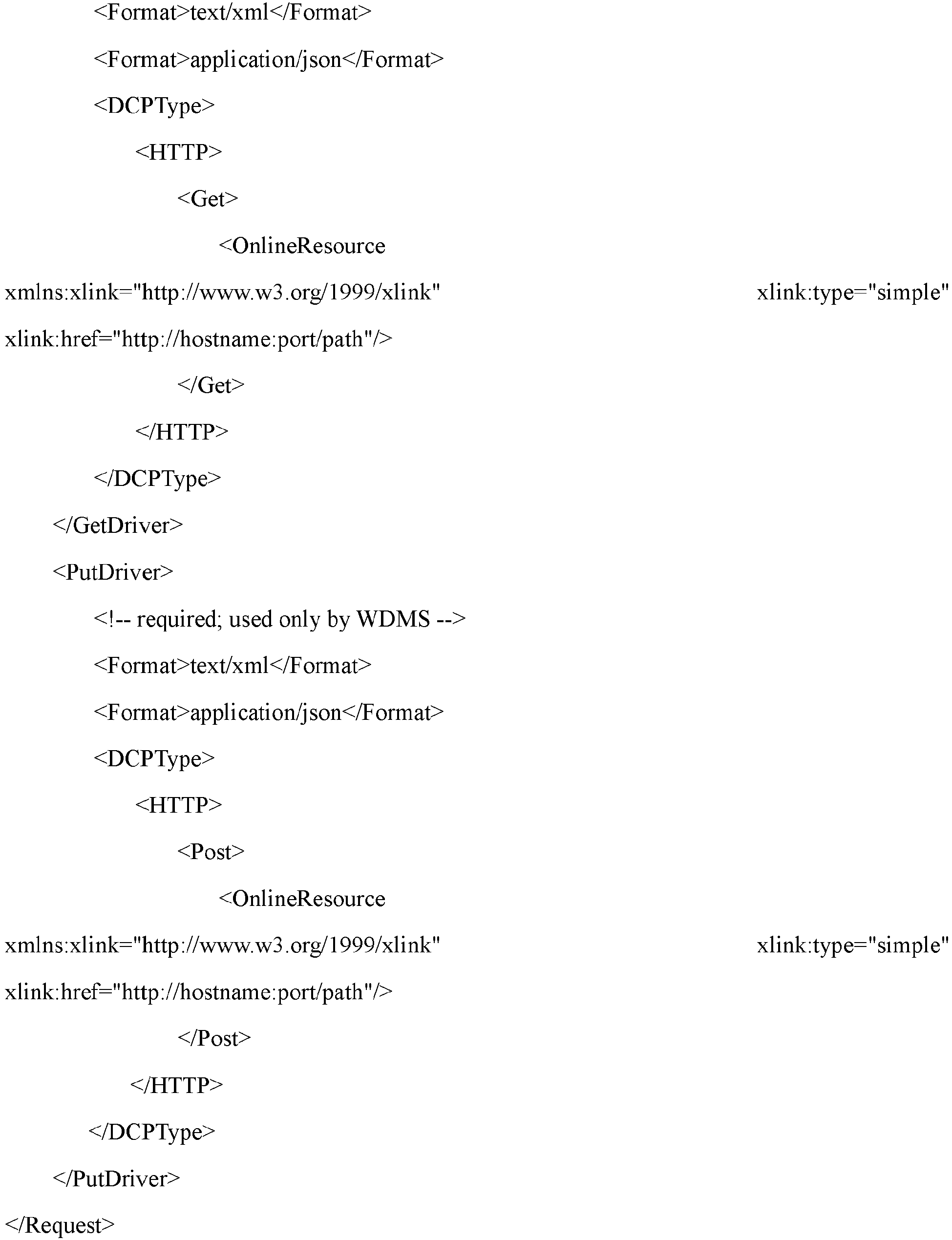

As compared with the WMS, in the WDMS, the profile description about the map data drivers is added and expressed in a node <Driver/>, in parallel with nodes <Request/><Exception/><Layer/>. The extension thereof is not limited to an XML description form, and the reserved characters are described as follows.

| Response parameter | Mandatory/optional | Description |
|---|---|---|
| Name=driver name | mandatory | Name: a parameter value is a unique name of a driver |
| Title=title | optional | Title: a parameter value is a document title |
| Abstract=driver_hel p_topic | mandatory | Abstract: a parameter value is function description about a driver |
| KeywordList=keyw ord_list | optional | Keyword list: a comma-separated keyword sequence related to a driver |
| MetadataList=driver _metadata_item_list | optional | Metadata list: a parameter value is a list of metadata items of a driver |
| NamedLayer=name d_layer_list | mandatory | Named layer: a parameter value is a list of unique names of layers capable of being driven by a driver |
| EXCEPTIONS= exception_format | optional | Exceptions: a designated exception format, e.g., an exception format defined in WMS by default |

### (2) GetMap (mandatory)

Function description: obtaining a map.

### Reserved characters:

| Request parameter | mandatory/optional | Description |
|---|---|---|
| SERVICE=WDMS \| WMS | mandatory | Service name: generally WDMS, and compatibly WMS |
| VERSION=version | optional | Version number: WDMS 1.0.0 by default, or compatibly WMS 1.1.1 by default |
| Parameters, including but not limited to REQUEST, LAYERS, STYLES, SRS, BBOX, WIDTH, HEIGHT and FORMAT, are known in the WMS standard and thus omitted herein. | | |

Standard response: the WMS standard is used, and a map image is returned in a designated output format by default.

Exception response: the WMS standard is used.

### (3) GetFeatureInfo (optional)

Function description: obtaining designated feature information.

### Reserved characters:

| Request parameter | Mandatory/optional | Description |
|---|---|---|
| SERVICE=WDMS \| WMS | mandatory | Service name: generally WDMS, and compatibly WMS. |
| VERSION=version | optional | Version number: WDMS 1.0.0 by default, or compatibly WMS 1.1.1 by default. |
| The other request parameters, including but not limited to REQUEST, are known in the WMS standard and thus omitted herein. | | |

Standard response: determined by a WDMS | WMS provider itself, but related to a characteristic of closest coordinates (X, Y).

Exception response: the WMS standard is used.

### (4) DescribeDriver (mandatory)

Function description: obtaining detailed static description about a map data driver (set).

### Reserved characters:

| Request parameter | Mandatory/optional | Description |
|---|---|---|
| SERVICE=WDM S | mandatory | Service name: a parameter value is merely WDMS. |
| VERSION=versio n | optional | Version number: WDMS 1.0.0 by default |
| REQUEST=Descr ibeDriver | mandatory | Operation name: a parameter value is merely DescribeDriver. |
| DRIVER=driver name_list | mandatory | Driver list: a unique name sequence of drivers separated by comma, one driver being included. |
| FORMAT=output _format | optional | Output format: an XML text format by default. |
| EXCEPTIONS= exception_format | optional | Exception format: a designated exception format, e.g., an exception format defined in WMS by default, i.e., application/vnd.ogc.se_xml. |

Standard response: a document in an XML format is returned by default, and its content includes detailed static description about the map data drivers, i.e., profile description about a driver obtained through GetCapabilites, and a static description list of operable requests for the driver such as parameter-void Action and parameter-containing Method. In addition, the WDMS provider determines by itself static description about optional parameters of the driver. The detailed static description about the map data driver is in a form of, including but not limited to, an XML document. Reserved characters are described as follows.

| Response parameter | Mandatory/optional | Description |
|---|---|---|
| Name=driver name | mandatory | Name: a parameter value is a unique name of a driver. |
| Title=title | optional | Title: a parameter value is a title of a document. |
| Abstract=driver_hel p_topic | mandatory | Abstract: a parameter value is function description of a driver. |
| KeywordList=keyw ord_list | optional | Keyword list: a comma-separated keyword sequence related to a driver. |
| MetadataList=driver _metadata_item_list | optional | Metadata list: a parameter value is a metadata list of a driver. |
| ActionList=driver_a ction_list | mandatory | Action list: a parameter value is a parameter-void operation list provided by a driver. |
| MethodList=driver method_list | mandatory | Method list: a parameter value is a parameter-containing operation list provided by a driver. |
| EXCEPTIONS= exception_format | optional | Exception format: a designated exception format, e.g., an exception format defined in WMS, i.e., application/vnd.ogc.se_xml. |

### (5) GetDriver (mandatory)

Function description: obtaining detailed dynamic description about a designated map data driver (set).

### Reserved characters:

| Request parameter | Mandatory/optional | Description |
|---|---|---|
| SERVICE=WDMS | mandatory | Service name: a parameter value is merely WDMS. |
| VERSION=version | optional | Version number: WDMS 1.0.0 by default. |
| REQUEST=GetDriv er | mandatory | Operation name: a parameter value is merely GetDriver. |
| DRIVER=driver_na me_list | mandatory | Driver name: as a filter, it is used to filter out a driver corresponding to a unique name sequence. |
| SOURCE=driver_so urce_uri | optional | Data source: as a filter, it is used to filter out a driver corresponding to the data source. |
| FORMAT=output_fo rmat | optional | Output format: an XML text format by default. |
| EXCEPTIONS= exception_format | optional | Exception format: a designated exception format, e.g., an exception format defined in WMS, i.e., application/vnd.ogc.se_xml. |

Standard response: a document in an XML format is returned by default, and its content includes detailed dynamic description about the map data drivers, i.e., profile description about a driver obtained through GetCapabilites, and dynamic description about operable requests for the driver such as parameter-void Action and parameter-containing Method. In addition, the WDMS provider determines by itself dynamic description about optional parameters of the driver. The detailed dynamic description about the map data driver is in a form of, including but not limited to, an XML document. Reserved characters are described as follows.

| Response parameter | Mandatory/optional | Description |
|---|---|---|
| Name=driver name | mandatory | Name: a parameter value is a driver name. |
| Title=title | optional | Title: a parameter value is a title of a document. |
| Abstract=driver_hel p_topic | mandatory | Abstract: a parameter value is function description about a driver. |
| KeywordList=keyw ord_list | optional | Keyword list: a comma-separated keyword sequence related to a driver. |
| MetadataList=driver _metadata_item_list | optional | Metadata list: a parameter value is a metadata list of a driver. |
| Source=driver_sourc e_uri | optional | Data source: a parameter value is a data source of a driver. |
| EXCEPTIONS= exception_format | optional | Exception format: a designated exception format, e.g., an exception format defined in WMS, i.e., application/vnd.ogc.se_xml. |

### (6) PutDriver (mandatory)

Function description: configuring a designated map data driver.

### Reserved characters:

| Request parameter | Mandatory/optional | Description |
|---|---|---|
| SERVICE=WDMS | mandatory | Service name: a parameter value is merely WDMS. |
| VERSION=version | optional | Version number: WDMS 1.0.0 by default. |
| REQUEST=PutDrive r | mandatory | Operation name: a parameter value is merely Putdriver. |
| DRIVER=driver_na me | mandatory | Driver name: e.g., Driver=VideoMosaicer, and a parameter value is merely a unique name of a single driver. |
| SOURCE=driver_sou rce_uri | optional | Data source: e.g., SOURCE=rtmp://hostname:port/live/hks2, particularly another map data driver also serves as a data source. |
| ACTION=action_na me | optional | Action name: an optional parameter-void operation, e.g., ACTION=Start \| Stop. |
| METHOD=method_n ame, parameter_value1,... | optional | Method name: an optional parameter-containing operation, e.g., METHOD=SetFrameSki ps, 4. |
| EXCEPTIONS= exception_format | optional | Exception format: a designated exception format, e.g., an exception format defined in WMS, i.e., application/vnd.ogc.se_xml. |

Standard response: a document in an XML format is returned by default, and its content is completely the same as that returned through GetDriver, i.e., detailed dynamic description about a configured map data driver is returned.

Exception response: it may refer to the WMs standard.

### (7) DescribeLayer, GetLegendGraphic, GetStyles and PutStyles (for SLD WMS only)

The definitions of the dimensions are the same as those in the SLD WMS, i.e., the definitions in the WDMS are a direct descendent of those in the SLD WMS without any modification.

To be specific, the WDMS is a specific implementation of the Web Service. The Web Service consists of a Web Browser/Client, an HTTP server, a CGI program and a Dataset/Database. For the WDMS, the CGI program is a WDMS server. Particularly, the WDMS server at least includes a map data driver for dynamically updating original data of a map.

The WDMS provides an application assembly for the web dynamic map service, and a core of the assembly is a WDMS server. The WDMS server includes a Web request dispatcher, a map image renderer, a map data driver, and a spatio-temporal data driver.

The web request dispatcher takes charge of parsing a specific service type in the URL, an operation request, and a set of parameter key value pairs for the operation request, and issuing the request to a corresponding request processing module in accordance with the specific Web service type. After a response has been received from the request processing module, the Web request dispatcher further takes charge of transmitting a result to the client.

The web image renderer takes charge of responding to a request for rendering designated image data, i.e., rendering a map image in accordance with original data of the map and a designated style, and returning a result to a requester.

The web data driver takes charge of responding to a request with respect to its own running state, and independently requesting the spatio-temporal data driver to perform a reading/writing operation on the original data of a designated map in accordance with a service realized by the map data driver.

The spatio-temporal data driver takes charge of responding to a request for performing the reading/writing operation on the original data of the designated map, and a multi-process/multi-thread concurrent reading/writing mechanism must be ensured.

It should be appreciated that, preferably the WDMS server is implemented on the basis of an open-source MapServer platform. A WDMS dispatcher implemented on the basis of a MapServer open-source library, as a Web request dispatcher, dispatches and processes WDMS and WMS requests. A map drawing interface provided by the MapServer is encapsulated into the map image renderer (MapDrawer). A video mosaicer (VideoMosaicer) is used as an optional map data driver. GDAL and plug-ins thereof are used as a spatio-temporal data driver, so as to provide a cross-process data reading/writing mechanism.

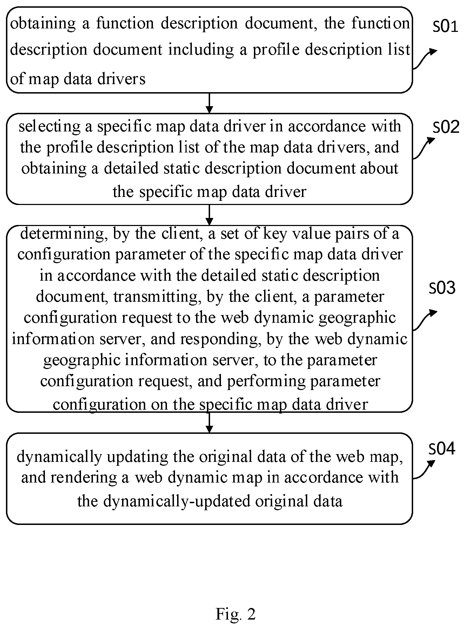

A specific implementation will be described as follows in conjunction with Fig. 2.

S01: obtaining a function description document. The function description document includes a profile description list of map data drivers. The profile description list must include a unique name of each map data driver, a metadata list and a list of unique identities of supported map data, and optionally includes a title, an abstract and a keyword list. Through the function description document, the client determines the drivers included in a current service, data corresponding to the drivers, and relevant information.

Through GetCapabilities in a WDMS protocol, a URL is created at a Web map client, and a request is initiated to an HTTP server through an HTTP protocol. Upon the receipt of the request, the HTTP server initiates a request to the WDMS server through the URL for GetCapabilities transferred through a CGI protocol. The WDMS server parses the URL for GetCapabilities, so as to process the request.

Further, the request for GetCapabilities is processed in the WDMS server as follows.

At first, the Web request dispatcher (WDMSDispatcher) takes charge of parsing the URL for GetCapabilities to obtain a key value pair of a first request parameter, and checking whether a service protocol is WDMS.

Next, the WDMSDispatcher reads the first request parameter for GetCapabilities from a configuration file for a current map service.

Then, the WDMSDispatcher serializes the first request parameter for GetCapabilities into the function description document in an XML format by default.

Finally, the WDMSDispatcher transmits the function description document for GetCapabilities to the client.

The client obtains profile description about the supported map data driver from the function description document returned through GetCapabilities. The profile description must include a unique name of the map data driver, the metadata list, and a list of unique names of supported map layers, and optionally includes a title, an abstract and a keyword list.

S02: selecting a specific map data driver in accordance with the profile description list of the map data drivers, and obtaining a detailed static description document about the specific map data driver. The detailed static description document must include a unique name of the map data driver, a metadata list, a supported operation, and a set of key value pairs of an operation parameter, and optionally includes a title, an abstract and a keyword list. A value of the key value pair is a default value.

A URL is created at the client in accordance with the profile description list of the specific map data driver and DescribeDriver in the WDMS protocol. A request is initiated to the HTTP server through an HTTP protocol. Upon the receipt of the request, the HTTP server initiates a request to the WDMS server through the URL for DescribeDriver transferred through a CGI protocol.

Further, the request for DescribeDriver is processed in the WDMS server as follows.

At first, the WDMSDispatcher parses a URL for DescribeDriver so as to obtain a key value pair of a second request parameter, and checks whether a service protocol is WDMS.

Next, the WDMSDispatcher reads a second parameter requested through DescribeDriver from a configuration file of a current map service.

Next, the WDMSDispatcher serializes the second parameter, by default, into a detailed static description document of the map data driver in an XML format, i.e., a result of DescribeDriver.

Finally, the WDMSDispatcher transmits the detailed static description document of DescribeDriver to the client.

S03: determining, by the client, a set of key value pairs of a configuration parameter of the specific map data driver in accordance with the detailed static description document, transmitting, by the client, a parameter configuration request to the Web dynamic geographic information server, and performing, by the web dynamic geographic information server, parameter configuration on the specific map data driver in response to the parameter configuration request.

A URL is created by the web map client in accordance with the detailed static description list and PutDriver in the WDMS protocol. A request is initiated by an HTTP server through an HTTP protocol. Upon the receipt of the request, the HTTP server initiates a request to the WDMS server through the URL for PutDriver transferred through a CGI protocol.

Further, the request for PutDriver is processed in the WDMS server as follows.

At first, the WDMSDispatcher parses the URL for PutDriver so as to obtain a key value pair of a third request parameter, and checks whether a service protocol is WDMS.

Next, the WDMSDispatcher configures a parameter designated through PutDriver into a specific map data driver, and starts the specific map data driver. The map data driver on which the configuration has been completed starts to run, and transmits a request for reading/writing the original data of the map to the GDAL in an on-demand manner in accordance with its own service logic.

Finally, the GDAL responds to the request from the specific map data driver in accordance with its read/write locking mechanism, so as to dynamically update the original data of the map.

S04: dynamically updating the original data of the web map, and rendering a web dynamic map in accordance with the dynamically-updated original data.

A URL is created at a web map client in accordance with the practical service requirement through GetMap in the WDMS or WMS protocol. A request is initiated to an HTTP server through an HTTP protocol. Upon the receipt of the request, the HTTP server initiates a request to the WDMS server through the URL for GetMap transferred through a CGI protocol.

Further, the request for GetMap is processed in the WDMS server as follows.

At first, the WDMSDispatcher parses the URL for GetMap so as to obtain a key value pair of a fourth request parameter, and checks whether a service protocol is WDMS or WMS.

Next, upon the receipt of a request, MapDrawer transmits a read-only request for the original data of the map to the GDAL in accordance with its own requirement on rendering the map image. The GDAL responds to the read-only request from MapDrawer in accordance with its own read-write locking mechanism, and transmits the original data of the map with respect to a designated parameter. MapDrawer receives the original data, renders the map image in a designated style, and transmits the rendered map image to WDMSDispatcher.

Finally, WDMSDispatcher transmits the map image for GetMap to the client.

The WMS standard is used by GetMap, and the mage image is returned in a designated output format by default.

In a possible embodiment of the present disclosure, the client transmits a request for obtaining the map data driver to the server, and the server transmits detailed dynamic description document of the map data driver to the client. The detailed dynamic description document must include a unique name of the map data driver, a metadata list and an opened data source.

The client may perform WDMS+WMS GetFeatureInfo and GetMap for many times, or perform WDMS+SLD WMS Describelayer, GetStyles and PutStyles for many times.

### Second Embodiment

In a process of obtaining a full motion video, the client needs to present a range of a field of view of a sensor on the map in real time, and this range is represented in the form of dynamically-changed vector data. When AI detection is performed in the full motion video, a detection result needs to be dynamically drawn in the map. At this time, it is necessary to dynamically read/write the incrementally-generated vector in a dataset (database) through an interaction mechanism consisting of an AI detection unit, a vector data generation unit and a system control unit, so as to dynamically generate and modify AI detection data. However, for a conventional vector feature update mode, it is difficult to meet the requirements of the browser or client on dynamically updating the vector data.

In a conventional WFS protocol, with respect to the updating of the vector data, merely basic functions of addition, deletion, checking and modification are provided. However, the collection and application of remote sensing data need to be supported with more geographic feature updating modes, which include, but not limited to, generating the vector data through a specific algorithm in a region, and modifying the vector data dynamically in accordance with the geographic information metadata. Hence, a new data updating mode needs to be provided.

The present disclosure provides in this embodiment a method and a device for realizing a web dynamic feature server, and the device includes a web dynamic feature service (WDFS) server and a client.

The WDFS is extended on the basis of the WFS, i.e., the WDFS is used to realize the HTTP interfaces for the operations GetCapabilities, DescribeFeatureType, GetFeature, ListStoreQueries (for returning a query list stored in the server) and DescribeStoreQueries (for returning description about the stored query recited in a request parameter) defined in the WFS, and optionally, HTTP interfaces for operations GetPropertyValue (for returning a property value of a designated field of a feature type), LockFeature (for locking a group of feature instances, and data is incapable of being modified through the other operations after the locking is completed), GetFeatureWithLock (for providing a function similar to GetFeature, with an additional function for locking), Transaction (for returning result description after a transaction request has been executed, and one transaction request includes feature addition, feature updating, feature replacement, and feature deletion), CreateStoredQuery (for creating and storing a query, and the query is triggered easily by the client through clicking), and DropStoredQuery (for deleting the stored query from the server). Further, the WDFS is used to realize HTTP interfaces for operations DescribeDriver, GetDriver and PutDriver. In addition, the WDFS also needs to provide profile description about data drivers in a service function description document returned through GetCapabilities, so as to facilitate the subsequent operations DescribeDriver, GetDriver and PutDriver.

### (1) GetCapabilities (mandatory)

Function description: obtaining a function document (in an XML format by default).

### Reserved characters:

| Request parameter | Mandatory/optional | Description |
|---|---|---|
| SERVICE=WDFS \| WFS | mandatory | Service name: generally, WDFS; compatibly, WFS. |
| VERSION=version | optional | Version Number: WDFS 1.0.0 by default, or compatibly WFS 2.0.2 by default. |
| The other request parameters, including but not limited to REQUEST, are known in a WFS standard and thus omitted herein. | | |

Standard response: a service function description document in an XML format is returned by default.

This service function description document is obtained through extending a service function description document returned through GetCapabilites in the WMS, and a part of contents known in the service function description document in the WFS may refer to http://schemas.opengis.net/wfs/2.0/examples/GetCapabilities/GetCapabilities_Res_01.xml.

For the three additional operations DescribeDriver, GetDriver and PutDriver of the WDFS relative to the WFS, the extended XML description contents are provided as follows.

```
 <OperationsMetadata>
    ...<!-- Operations; used by WFS & WDFS -->
    <Operation name="DescribeDriver">
        <DCP>
           <HTTP>
                <Get xlink:href=''http://hostname:port/describedriver"/>
           </HTTP>
        </DCP>
    </Operation>
    <Operation name="GetDriver">
        <DCP>
           <HTTP>
                <Get xlink:href="http://hostname:port/getdriver"/>
           </HTTP>
        </DCP>
     </Operation>
    <Operation name="PutDriver">
        <DCP>
           <HTTP>
                <Post xlink:href="http://hostname:port/putdriver"/>
           </HTTP>
       </DCP>
     </Operation>
    ......
 </OperationsMetadata>
```

As compared with the WFS, in the WDFS, the description about feature data drivers is added, in parallel with nodes < OperationsMetadata/>, < FeatureTypeList/> and < Filter_Capabilities/>. The extension thereof is not limited to an XML description form, and the reserved characters are described as follows.

| Response parameter | Mandatory/optional | Description |
|---|---|---|
| Name=driver name | mandatory | Name: a parameter value is a unique name of a driver. |
| Title=title | optional | Title: a parameter value is a document title. |
| Abstract=driver_hel p_topic | mandatory | Abstract: a parameter value is function description about a driver. |
| KeywordList=keyw ord_list | optional | Keyword list: a comma-separated keyword sequence related to a driver. |
| MetadataList=driver _metadata_item_list | optional | Metadata list: a parameter value is a list of metadata items of a driver. |
| NamedFeatureTypes =named_feature_typ e_list | mandatory | Named feature type list: a parameter value is a feature type list supported by a driver. |
| EXCEPTIONS= exception_format | optional | Exceptions: a designated exception format, e.g., an exception format defined in WMS by default. |

### (2) GetFeature (mandatory)

Function description: obtaining a set of geographic feature instances.

### Reserved characters:

| Request parameter | Mandatory/optional | Description |
|---|---|---|
| SERVICE=WDFS \| WFS | mandatory | Service name: generally WDFS, and compatibly WFS. |
| VERSION=versio n | optional | Version number: WDFS 1.0.0 by default, or compatibly WFS 2.0.2 by default. |
| Parameters, including but not limited to REQUEST, COUNT, BBOX, PROPETYNAME, SORTBY and SRSNAME, are known in the WFS standard and thus omitted herein. | | |

Standard response: the WFS standard is used, and a geographic feature is returned in a designated output format by default.

Exception response: the WFS standard is used.

### (3) ListStoreQueries (optional)

Function description: returning a query list stored in the server.

### Reserved characters:

| Request parameter | Mandatory/optional | Description |
|---|---|---|
| SERVICE=WDFS \| WFS | mandatory | Service name: generally WDFS, and compatibly WFS. |
| VERSION=versio n | optional | Version number: WDFS 1.0.0 by default, or compatibly WFS 2.0.2 by default. |
| The other request parameters, including but not limited to REQUEST, are known in the WFS standard and thus omitted herein. | | |

Standard response: the WFS standard is used, and an XML document is returned so as to display an identifier and a name of each query stored in the server.

Exception response: the WFS standard is used.

### (4) DescribeFeatureType (optional)

Function description: returning structure description about a geographic feature type in the request, including attributes.

### Reserved characters:

| Request parameter | Mandatory/optional | Description |
|---|---|---|
| SERVICE=WDFS \| WFS | mandatory | Service name: generally WDFS, and compatibly WFS. |
| VERSION=version | optional | Version number: WDFS 1.0.0 by default, or compatibly WFS 2.0.2 by default. |
| The other parameters, including but not limited to REQUEST and TYPENAMES, are known in the WFS standard and thus omitted herein. | | |

Standard response: the WFS standard is used, and an XML architecture definition document is returned by default, including detailed description about a designated function type.

Exception response: the WFS standard is used.

### (5) DescribeStoreQueries (optional)

Function description: returning description about a stored query recited in a request parameter.

### Reserved characters:

| Request parameter | Mandatory/optional | Description |
|---|---|---|
| SERVICE=WDFS \| WFS | mandatory | Service name: generally WDFS, and compatibly WFS. |
| VERSION=versio n | optional | Version number: WDFS 1.0.0 by default, or compatibly WFS 2.0.2 by default. |
| The other parameters, including but not limited to REQUEST and STOREDQUERY_ID, are known in the WFS standard and thus omitted herein. | | |

Standard response: the WFS standard is used, and an XML document is returned and used to describe a stored query for an identifier designated through STOREDQUERY_ID.

Exception response: the WFS standard is used.

### (6) DescribeDriver (mandatory)

Function description: obtaining detailed static description about a feature data driver (set).

### Reserved characters:

| Request parameter | Mandatory/optional | Description |
|---|---|---|
| SERVICE=WDFS | mandatory | Service name: a parameter value is merely WDFS. |
| VERSION=versio n | optional | Version number: WDFS 1.0.0 by default. |
| REQUEST=Descr ibeDriver | mandatory | Operation name: a parameter value is merely DescribeDriver. |
| DRIVER=driver name_list | mandatory | Driver list: a unique name sequence of drivers separated by comma, one driver being included. |
| FORMAT=output _format | optional | Output format: an XML text format by default. |
| EXCEPTIONS= exception_format | optional | Exception format: a designated exception format, e.g., an exception format defined in WFS by default. |

Standard response: a document in an XML format is returned by default, and its content includes detailed static description about the feature data drivers, i.e., profile description about a driver obtained through GetCapabilites, and a static description list of operable requests for the driver such as parameter-void Action and parameter-containing Method. In addition, a WDFS provider determines by itself static description about optional parameters of the driver. The detailed static description about the feature data driver is in a form of, including but not limited to, an XML document. Reserved characters are described as follows.

| Response parameter | Mandatory/optional | Description |
|---|---|---|
| Name=driver name | mandatory | Name: a parameter value is a unique name of a driver. |
| Title=title | optional | Title: a parameter value is a title of a document. |
| Abstract=driver_help _topic | mandatory | Abstract: a parameter value is function description of a driver. |
| KeywordList=keywo rd_list | optional | Keyword list: a comma-separated keyword sequence related to a driver. |
| MetadataList=driver_ metadata_item_list | optional | Metadata list: a parameter value is a metadata list of a driver. |
| ActionList=driver _ac tion_list | mandatory | Operation list: a parameter value is a parameter-void operation list provided by a driver. |
| MethodList==driver_ method_list | mandatory | Method list: a parameter value is a parameter-containing operation list provided by a driver. |
| EXCEPTIONS= exception_format | optional | Exception format: a designated exception format, e.g., an exception format defined in WFS. |

### (7) GetDriver (mandatory)

Function description: obtaining detailed dynamic description about a designated feature data driver (set).

### Reserved characters:

| Request parameter | mandatory/optional | Description |
|---|---|---|
| SERVICE=WDFS | mandatory | Service name: a parameter value is merely WDFS. |
| VERSION=version | optional | Version number: WDFS 1.0.0 by default. |
| REQUEST=GetDri ver | mandatory | Operation name: a parameter value is merely GetDriver. |
| DRIVER=driver_n ame_list | mandatory | Driver name: as a filter, it is used to filter out a driver corresponding to a unique name sequence. |
| SOURCE=driver_s ource_uri | optional | Data source: as a filter, it is used to filter out a driver corresponding to the data source. |
| FORMAT=output_f ormat | optional | Output format: an XML text format by default. |
| EXCEPTIONS= exception_format | optional | Exception format: a designated exception format, e.g., an exception format defined in WFS. |

Standard response: a document in an XML format is returned by default, and its content includes detailed dynamic description about the feature data drivers, i.e., profile description about a driver obtained through GetCapabilites, and dynamic description about operable requests for the driver such as parameter-void Action and parameter-containing Method. In addition, the WDFS provider determines by itself dynamic description about optional parameters of the driver. The detailed dynamic description about the feature data driver is in a form of, including but not limited to, an XML document. Reserved characters are described as follows.

| Response parameter | Mandatory/optional | Description |
|---|---|---|
| Name=driver name | mandatory | Name: a parameter value is a unique name of a driver. |
| Title=title | optional | Title: a parameter value is a title of a document. |
| Abstract=driver_hel p_topic | mandatory | Abstract: a parameter value is function description about a driver. |
| KeywordList=keyw ord_list | optional | Keyword list: a comma-separated keyword sequence related to a driver. |
| MetadataList=driver _metadata_item_list | optional | Metadata list: a parameter value is a metadata list of a driver. |
| Source=driver_sourc e_uri | optional | Data source: a parameter value is a data source of a driver. |
| EXCEPTIONS= exception_format | optional | Exception format: a designated exception format, e.g., an exception format defined in WFS. |

### (8) PutDriver (mandatory)

Function description: configuring a designated feature data driver.

### Reserved characters:

| Request parameter | Mandatory/optional | Description |
|---|---|---|
| SERVICE=WDFS | mandatory | Service name: a parameter value is merely WDFS. |
| VERSION=version | optional | Version number: WDFS 1.0.0 by default. |
| REQUEST=PutDriver | mandatory | Operation name: a parameter value is merely Putdriver. |
| DRIVER=driver name | mandatory | Driver name: e.g., Driver=AIDetector, and a parameter value is merely a unique name of a single driver. |
| ACTION=action_name | optional | Action name: an optional parameter-void operation, e.g., ACTION=Start \| Stop. |
| METHOD=method_na me, parameter_value,... | optional | Method name: an optional parameter-containing operation, e.g., METHOD= AIDetect, ship. |
| EXCEPTIONS= exception_format | optional | Exception format: a designated exception format, e.g., an exception format defined in WFS. |

Standard response: a document in an XML format is returned by default, and its content is completely the same as that returned through GetDriver, i.e., detailed dynamic description about a configured feature data driver is returned.

Exception response: it may refer to the WFS standard.

### (9) GetPropertyValue, GetFeatureWithLock, LockFeature, Transaction, CreateStoredQuery and DropStoredQuery (for SLD WFS only)

The definitions of the dimensions are the same as those in the SLD WFS, i.e., the definitions in the WDFS are a direct descendent of those in the SLD WFS without any modification.

The WDFS is a specific implementation of the Web Service. The Web Service consists of a Web Browser/Client, an HTTP server, a CGI program and a Dataset/Database. For the WDFS, the CGI program is a WDFS server. Particularly, the WDFS server at least includes a feature data driver.

The WDFS provides an application assembly for the web dynamic geographic feature service, and a core of the assembly is a WDFS server. The WDFS server includes a Web request dispatcher, a feature image renderer, and a spatio-temporal data driver.

The Web request dispatcher takes charge of parsing a specific service type in the URL, an operation request, and a set of parameter key value pairs for the operation request, and issuing the request to a corresponding request processing module in accordance with the specific Web service type. After a response has been received from the request processing module, the Web request dispatcher further takes charge of transmitting a result to the client.

The feature data driver takes charge of responding to a request with respect to its own running state, and independently requesting the spatio-temporal data driver to perform a reading/writing operation on the designated vector data in accordance with a service realized by the feature data driver.

The spatio-temporal data driver takes charge of responding to a request for performing the reading/writing operation on the designated original vector data, and a multi-process/multi-thread concurrent reading/writing mechanism must be ensured.

It should be appreciated that, preferably the WDMS server is implemented on the basis of an open-source MapServer platform. A WDFSDispatcher with a WDFS protocol parsing capability is added as a Web request dispatcher. A self-developed AI detector is used as an optional feature data driver. GDAL and plug-ins thereof are used as an abstract data driver, so as to provide a cross-process data reading/writing mechanism.

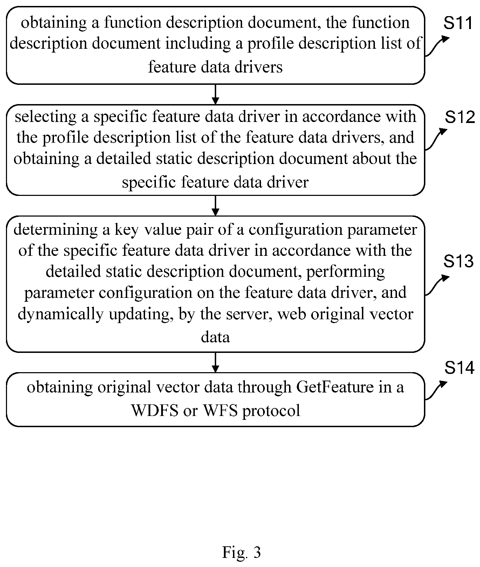

A specific implementation will be described as follows in conjunction with Fig. 3.

S11: obtaining a function description document. The function description document includes a profile description list of feature data drivers. The profile description list must include a unique name of each feature data driver, a metadata list and a list of unique identities of supported feature data, and optionally includes a title, an abstract and a keyword list. Through the function description document, the client determines the drivers included in a current service, data corresponding to the drivers, and relevant information.

Through GetCapabilities in a WDFS protocol, a URL is created at a Web client, and a request is initiated to an HTTP server through an HTTP protocol. Upon the receipt of the request, the HTTP server initiates a request to the WDFS server through the URL for GetCapabilities transferred through a CGI protocol. The WDFS server parses the URL for GetCapabilities, so as to process the request.

Further, the request for GetCapabilities is processed in the WDFS server as follows.

At first, the Web request dispatcher (WDFSDispatcher) takes charge of parsing the URL for GetCapabilities to obtain a key value pair of a first request parameter, and checking whether a service protocol is WDFS.

Next, the WDFSDispatcher reads the first request parameter for GetCapabilities from a configuration file for a current map service.

Then, the WDFSDispatcher serializes the first request parameter for GetCapabilities into the function description document in an XML format by default.

Finally, the WDFSDispatcher transmits the function description document for GetCapabilities to the client.

The client obtains profile description about the supported feature data driver from the function description document returned through GetCapabilities. The profile description must include a unique name of the feature data driver, the metadata list, and a list of unique names of supported feature data, and optionally includes a title, an abstract and a keyword list. In this way, the client determines the drivers included in a current service, data corresponding to the drivers, and relevant information.

S12: selecting a specific feature data driver in accordance with the profile description list of the feature data drivers, and obtaining a detailed static description document about the specific feature data driver. The detailed static description document must include a unique name of the feature data driver, a metadata list, a supported operation, and a set of key value pairs of an operation parameter, and optionally includes a title, an abstract and a keyword list. A value of the key value pair is a default value. In this way, the client determines relevant information about the operation corresponding to the driver included in the current service.

A URL is created at the client in accordance with the profile description list of the specific feature data driver and DescribeDriver in the WDFS protocol. A request is initiated to the HTTP server through an HTTP protocol. Upon the receipt of the request, the HTTP server initiates a request to the WDFS server through the URL for DescribeDriver transferred through a CGI protocol.

Further, the request for DescribeDriver is processed in the WDFS server as follows.

At first, the WDFSDispatcher parses a URL for DescribeDriver so as to obtain a key value pair of a second request parameter, and checks whether a service protocol is WDFS.

Next, the WDFSDispatcher reads a second parameter requested through DescribeDriver from a configuration file of a current feature service.

Next, the WDFSDispatcher serializes the second parameter, by default, into a detailed static description document of the feature data driver in an XML format, i.e., a result of DescribeDriver.

Finally, the WDFSDispatcher transmits the detailed static description document of DescribeDriver to the client.

S13: determining a key value pair of a configuration parameter of the specific feature data driver in accordance with the detailed static description document, performing parameter configuration on the feature data driver, and dynamically updating, by the server, web original vector data.

To be specific, a URL is created by the web feature client in accordance with the detailed static description list and PutDriver in the WDFS protocol. A request is initiated by an HTTP server through an HTTP protocol. Upon the receipt of the request, the HTTP server initiates a request to the WDFS server through the URL for PutDriver transferred through a CGI protocol.

Further, the request for PutDriver is processed in the WDFS server as follows.

At first, the WDFSDispatcher parses the URL for PutDriver so as to obtain a key value pair of a third request parameter, and checks whether a service protocol is WDFS.

Next, the WDFSDispatcher configures a parameter designated through PutDriver into a specific feature data driver, and starts the specific feature data driver. The specific feature data driver on which the configuration has been completed starts to run, and transmits a request for reading/writing the original vector data to the GDAL in an on-demand manner in accordance with its own service logic.

Finally, the GDAL responds to the request from the specific feature data driver in accordance with its read/write locking mechanism, so as to dynamically update the feature original data.

The operation PutDriver aims to configure the designated feature data driver, and the standard response includes returning a document in an XML format by default, i.e., the detailed dynamic description about the configured feature data driver.

S14: creating a URL at a client in accordance with the practical service requirement (e.g., a frequency of 25Hz) through GetFeature in the WDFS or WFS protocol, and initiating a request to an HTTP server through an HTTP protocol. Upon the receipt of the request, the HTTP server initiates a request to the WDFS server through the URL for GetFeature transferred through a CGI protocol.

Further, the request for GetFeature is processed in the WDFS server as follows.

At first, the WDFSDispatcher parses the URL for GetFeature so as to obtain a key value pair of a fourth request parameter, and checks whether a service protocol is WDFS or WFS.

Next, the WDFSDispatcher transmits a read-only request for the original vector data to the GDAL in accordance with the fourth request parameter for GetFeature. The GDAL responds to the read-only request from the WDFSDispatcher in accordance with a global read-write locking mechanism, and returns the original vector data with respect to the fourth request parameter.

Finally, the WDFSDispatcher transmits the vector data for GetFeature to the client.

In a possible embodiment of the present disclosure, the client transmits a request for obtaining the feature data driver to the server, and the server transmits detailed dynamic description document of the feature data driver to the client. The detailed dynamic description document must include a unique name of the feature data driver, a metadata list and an opened data source, so as to enable the client to determine the relevant information about the driver currently running for the current service.

### Third Embodiment

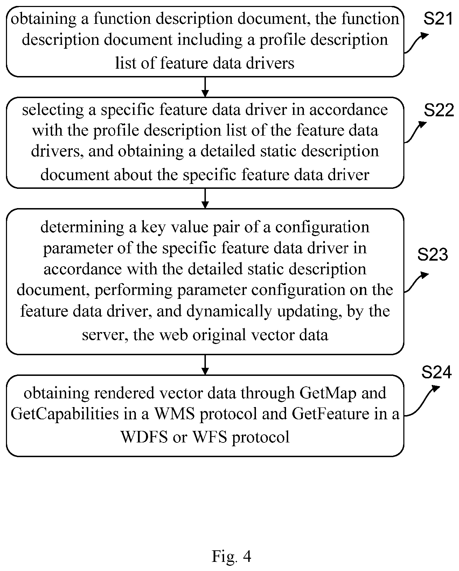

In this embodiment, a web dynamic map service is realized through the combination of the WMS protocol and the WDFS protocol. A specific implementation will be described hereinafter in conjunction with Fig. 4.

S21: obtaining a function description document. The function description document includes a profile description list of feature data drivers.

Through GetCapabilities in the WDFS protocol, a URL is created at a Web client, and a request in initiated to an HTTP server through an HTTP protocol. Upon the receipt of the request, the HTTP server initiates a request to the WDMS server through the URL for GetCapabilities transferred through a CGI protocol. The WDFS server parses the URL for GetCapabilities, so as to process the request.

Further, the request for GetCapabilities is processed in the WDFS server as follows.

At first, the WDFSDispatcher takes charge of parsing the URL for GetCapabilities to obtain a key value pair of a first request parameter, and checking whether a service protocol is WDFS.

Next, the WDFSDispatcher reads the first request parameter for GetCapabilities from a configuration file for a current map service.

Then, the WDFSDispatcher serializes the first request parameter for GetCapabilities into the function description document in an XML format by default.

Finally, the WDFSDispatcher transmits the function description document for GetCapabilities to the client.

The client obtains a profile description list of AI detectors in the supported feature data driver from the function description document returned through GetCapabilities.

S22: selecting a specific feature data driver in accordance with the profile description list of the feature data drivers, and obtaining a detailed static description document about the specific feature data driver. The detailed static description document must include a unique name of the feature data driver, a metadata list, a supported operation, and a set of key value pairs of an operation parameter, and optionally includes a title, an abstract and a keyword list. A value of the key value pair is a default value. In this way, the client determines the relevant information about the operation corresponding to the driver in the current service.

A URL is created at the client in accordance with the profile description list of the specific feature data driver and DescribeDriver in the WDFS protocol. A request is initiated to the HTTP server through an HTTP protocol. Upon the receipt of the request, the HTTP server initiates a request to the WDFS server through the URL for DescribeDriver transferred through a CGI protocol.

Further, the request for DescribeDriver is processed in the WDFS server as follows.

At first, the WDFSDispatcher parses a URL for DescribeDriver so as to obtain a key value pair of a second request parameter, and checks whether a service protocol is WDFS.

Next, the WDFSDispatcher reads a second parameter requested through DescribeDriver from a configuration file of a current feature service.

Next, the WDFSDispatcher serializes the second parameter, by default, into a detailed static description document of the feature data driver in an XML format, i.e., a result of DescribeDriver.

Finally, the WDFSDispatcher transmits the detailed static description document of DescribeDriver to the client.

S23: determining a key value pair of a configuration parameter of the specific feature data driver in accordance with the detailed static description document, performing parameter configuration on the feature data driver, and dynamically updating, by the server, the web original vector data.

To be specific, a URL is created by the web feature client in accordance with the detailed static description list and PutDriver in the WDFS protocol. A request is initiated by an HTTP server through an HTTP protocol. Upon the receipt of the request, the HTTP server initiates a request to the WDFS server through the URL for PutDriver transferred through a CGI protocol.

Further, the request for PutDriver is processed in the WDFS server as follows.

At first, the WDFSDispatcher parses the URL for PutDriver so as to obtain a key value pair of a third request parameter, and checks whether a service protocol is WDFS.

Next, the WDFSDispatcher configures a parameter designated through PutDriver into a specific feature data driver, and starts the specific feature data driver. The feature data driver on which the configuration has been completed starts to run, and transmits a request for reading/writing the original vector data to the GDAL in an on-demand manner in accordance with its own service logic.

Finally, the GDAL responds to the request from the specific map data driver in accordance with its read/write locking mechanism, so as to dynamically update the feature original data.

The operation PutDriver aims to configure the designated feature data driver, and the standard response includes returning a document in an XML format by default, i.e., the detailed dynamic description about the configured feature data driver.

S24: creating a URL at a web map client in accordance with GetCapabilities in the WMS protocol, and initiating a request to an HTTP server through an HTTP protocol. Upon the receipt of the request, the HTTP server initiates a request to the map server through the URL for GetCapabilities transferred through a CGI protocol. The WDFS server parses the URL for GetCapabilities, processes the request, and transmits a corresponding function description document to the client.

A URL is created at the WMS server in accordance with the practical service requirement through GetFeature in the WDFS or WFS protocol, and initiating a request to an HTTP server through an HTTP protocol. Upon the receipt of the request, the HTTP server initiates a request to the WDFS server through the URL for GetFeature transferred through a CGI protocol.

Further, the request for GetFeature is processed in the WDFS server as follows.

At first, the WDFSDispatcher parses the URL for GetFeature so as to obtain a key value pair of a fourth request parameter, checks whether a service protocol is WDFS or WFS, and transmits a read-only request for the original vector data to the GDAL. The GDAL responds to the read-only request from the WDFSDispatcher in accordance with a global read-write locking mechanism, and returns the original vector data with respect to the fourth request parameter.

Finally, the WDFSDispatcher transmits the original vector data for GetFeature to the WMS server.

A URL is created at the web map client in accordance with the practical service requirement through GetMap in the WMS protocol, and initiating a request to an HTTP server through an HTTP protocol. Upon the receipt of the request, the HTTP server initiates a request to the WMS server through the URL for GetMap transferred through a CGI protocol. The WMS server renders the vector data from the WDFS server, and transmits the data requested through GetMap to the client.

### Fourth Embodiment

In the related art, a data source is obtained in accordance with a WCS protocol, and the data source is a static data source, so it is impossible to represent a data driver, modify the data source, and meet the requirements on configuration and operation when the data driver is running. In other words, in the conventional WCS protocol, data obtained from the data source is static, and it is impossible to meet the requirement in a scenario where data generated in real time is taken as a data source.

The present disclosure provides in this embodiment a method and a device for realizing a web dynamic coverage service, and the device includes a web dynamic coverage service (WDCS) server and a client.

The WDCS (version=1.0.0) is extended on the basis of a WCS (version=1.1.0), i.e., the WDCS is used to realize HTTP interfaces for the operations GetCapabilities, DescribeCoverage, and GetCoverage defined in the WCS, and also used to realize HTTP interfaces for operations DescribeDriver, GetDriver and PutDriver. In addition, the WDCS also needs to provide profile description about data drivers in a service function description document returned through GetCapabilities, so as to facilitate the subsequent operations DescribeDriver, GetDriver and PutDriver.

### (1) GetCapabilities (mandatory)

Function description: obtaining a function document (in an XML format by default).

### Reserved characters:

| Request parameter | Mandatory/optional | Description |
|---|---|---|
| SERVICE=WDCS \| WCS | mandatory | Service name: generally, WDCS; compatibly, WCS |
| VERSION=versio n | optional | Version Number: WDCS 1.0.0 by default, or compatibly WCS 1.1.0 by default. |
| The other request parameters, including but not limited to REQUEST, are known in a WCS standard and thus omitted herein. | | |

Standard response: a service function description document in an XML format is returned by default.

This service function description document is obtained through extending a service function description document returned through GetCapabilites in the WCS, and a part of contents known in the service function description document in the WCS may refer to http://schemas.opengis.net/wes/1.1.0/Examples/exampleCapabilities1.xml.

For the three additional operations DescribeDriver, GetDriver and PutDriver of the WDCS relative to the WCS, the extended XML description contents are provided as follows.

```
 <OperationsMetadata>
    ...<!-- Operation; used by WCS & WDCS -->
    <!--The following is New Operations; used only by WDCS -->
     <Operation name="DescribeDriver">
        <DCP>
            <HTTP>
                 <Get xlink:href="http://server:port/DescribeDriverURL"/>
            </HTTP>
        </DCP>
       <Parameter name="Format">
           <AllowedValues>
               <Value>text/xml</Value>
               <Value>application/json</Value>
           </AllowedValues>
       </Parameter>
     </Operation>
     <Operation name="GetDriver">
        <DCP>
            <HTTP>
                <Get xlink:href="http://server:port/GetDriverURL"/>
            </HTTP>
        </DCP>
       <Parameter name="Format">
           <AllowedValues>
               <Value>text/xml</Value>
               <Value>application/j son</Value>
           </AllowedValues>
       </Parameter>
     </Operation>
    <Operation name="PutDriver">
        <DCP>
            <HTTP>
                 <Get xlink:href="http://server:port/PutDriverURL"/>
            </HTTP>
        </DCP>
       <Parameter name="Format">
           <AllowedValues>
               <Value>text/xml</Value>
               <Value>application/j son</Value>
           </AllowedValues>
       </Parameter>
     </Operation>
 </OperationsMetadata>
```

As compared with the WCS, in the WDCS, the description about data drivers is added, in parallel with nodes <OperationsMetadata/> and <Content>. The extension thereof is not limited to an XML description form, and the reserved characters are described as follows.

| Response parameter | Mandatory/optional | Description |
|---|---|---|
| Name=driver name | mandatory | Name: a parameter value is a unique name of a driver. |
| Title=title | optional | Title: a parameter value is a document title. |
| Abstract=driver_hel p_topic | mandatory | Abstract: a parameter value is function description about a driver. |
| KeywordList=keyw ord_list | optional | Keyword list: a comma-separated keyword sequence related to a driver. |
| MetadataList=driver _metadata_item_list | optional | Metadata list: a parameter value is a list of metadata items of a driver. |
| CoverageIdentifiers =Coverage_Identifie r_list | mandatory | Operation list: a parameter value is a list of unique names of coverage data supported by a driver. |
| EXCEPTIONS= exception_format | optional | Exception format: a designated exception format, e.g., an exception format defined in WCS by default. |

### (2) GetCoverage (mandatory)

Function description: obtaining coverage data.

### Reserved characters:

| Request parameter | Mandatory/optional | Description |
|---|---|---|
| SERVICE=WDC S \| WCS | mandatory | Service name: generally WDCS, and compatibly WCS. |
| VERSION=versio n | optional | Version number: WDCS 1.0.0 by default, or compatibly WCS 1.1.0 by default. |
| The other parameters, including but not limited to REQUEST, are known in the WCS standard and thus omitted herein. | | |

Standard response: the WCS standard is used, and coverage data in a designated output format is returned by default.

Exception response: the WCS standard is used.

### (3) DescribeCoverage (optional)

Function description: obtaining a detailed description document about one or more pieces of coverage data.

### Reserved characters:

| Request parameter | Mandatory/optional | Description |
|---|---|---|
| SERVICE=WDCS \| WCS | mandatory | Service name: generally WDCS, and compatibly WCS. |
| VERSION=version | optional | Version number: WDCS 1.0.0 by default, or compatibly WCS 1.1.0 by default. |
| The other parameters, including but not limited to REQUEST, are known in the WCS standard and thus omitted herein. | | |

Standard response: a service function description document in an XML format is returned by default. This service function description document is obtained through extending a service function description document returned through DescribeCoverage in the WCS, and a part of contents known in the service function description document in the WCS may refer to http://schemas.opengis.net/wcs/1.1.0/Examples/exampleDescribeCoverage1.xml.

Exception response: the WCS standard is used.

### (4) DescribeDriver (mandatory)

Function description: obtaining detailed static description about a data driver (set).

### Reserved characters:

| Request parameter | Mandatory/optional | Description |
|---|---|---|
| SERVICE=WDCS | mandatory | Service name: a parameter value is merely WDCS. |
| VERSION=versio n | optional | Version number: WDCS 1.0.0 by default. |
| REQUEST=Descr ibeDriver | mandatory | Operation name: a parameter value is merely DescribeDriver. |
| DRIVER=driver name_list | mandatory | Driver list: a unique name sequence of drivers separated by comma, one driver being included. |
| FORMAT=output _format | optional | Output format: an XML text format by default. |
| EXCEPTIONS= exception_format | optional | Exception format: a designated exception format, e.g., an exception format defined in WCS by default. |

Standard response: a document in an XML format is returned by default, and its content includes detailed static description about the data drivers, i.e., profile description about a driver obtained through GetCapabilites, and a static description list of operable requests for the driver such as parameter-void Action and parameter-containing Method. In addition, the WDCS provider determines by itself static description about optional parameters of the driver. The detailed static description about the map data driver is in a form of, including but not limited to, an XML document. Reserved characters are described as follows.

| Response parameter | Mandatory/optional | Description |
|---|---|---|
| Name=driver_name | mandatory | Name: a parameter value is a unique name of a driver. |
| Title=title | optional | Title: a parameter value is a title of a document. |
| Abstract=driver_hel p_topic | mandatory | Abstract: a parameter value is function description of a driver. |
| KeywordList=keyw ord_list | optional | Keyword list: a comma-separated keyword sequence related to a driver. |
| MetadataList=driver _metadata_item_list | optional | Metadata list: a parameter value is a metadata list of a driver. |
| ActionList=driver_a ction_list | mandatory | Operation list: a parameter value is a parameter-void operation list provided by a driver. |
| MethodList==driver _method_list | mandatory | Method list: a parameter value is a parameter-containing operation list provided by a driver. |
| EXCEPTIONS= exception_format | optional | Exception format: a designated exception format, e.g., an exception format defined in WMS. |

### (5) GetDriver (mandatory)

Function description: obtaining detailed dynamic description about a designated coverage data driver (set).

### Reserved characters:

| Request parameter | Mandatory/optional | Description |
|---|---|---|
| SERVICE=WDCS | mandatory | Service name: a parameter value is merely WDCS. |
| VERSION=version | optional | Version number: WDCS 1.0.0 by default. |
| REQUEST=GetDri ver | mandatory | Operation name: a parameter value is merely GetDriver. |
| DRIVER=driver_n ame_list | mandatory | Driver name: as a filter, it is used to filter out a driver corresponding to a unique name sequence. |
| SOURCE=driver_s ource_uri | optional | Data source: as a filter, it is used to filter out a driver corresponding to the data source. |
| FORMAT=output_f ormat | optional | Output format: an XML text format by default. |
| EXCEPTIONS= exception_format | optional | Exception format: a designated exception format, e.g., an exception format defined in WCS. |

Standard response: a document in an XML format is returned by default, and its content includes detailed dynamic description about the data drivers, i.e., profile description about a driver obtained through GetCapabilites, and dynamic description about operable requests for the driver such as parameter-void Action and parameter-containing Method. In addition, the WDCS provider determines by itself dynamic description about optional parameters of the driver. The detailed dynamic description about the data driver is in a form of, including but not limited to, an XML document. Reserved characters are described as follows.

| Response parameter | Mandatory/optional | Description |
|---|---|---|
| Name=driver_name | mandatory | Name: a parameter value is a driver name. |
| Title=title | optional | Title: a parameter value is a title of a document. |
| Abstract=driver_hel p_topic | mandatory | Abstract: a parameter value is function description about a driver. |
| KeywordList=keyw ord_list | optional | Keyword list: a comma-separated keyword sequence related to a driver. |
| MetadataList=driver _metadata_item_list | optional | Metadata list: a parameter value is a metadata list of a driver. |
| Source=driver_sourc e_uri | optional | Data source: a parameter value is a data source of a driver. |
| EXCEPTIONS= exception_format | optional | Exception format: a designated exception format, e.g., an exception format defined in WMS. |

### (6) PutDriver (mandatory)

Function description: configuring a designated coverage data driver.

### Reserved characters:

| Request parameter | Mandatory/optional | Description |
|---|---|---|
| SERVICE=WDCS | mandatory | Service name: a parameter value is merely WDCS. |
| VERSION=version | optional | Version number: WDCS 1.0.0 by default. |
| REQUEST=PutDriver | mandatory | Operation name: a parameter value is merely Putdriver. |
| DRIVER=driver_name | mandatory | Driver name: e.g., Driver=ImageMosaicer, and a parameter value is merely a unique name of a single driver. |
| SOURCE=driver_sour ce_uri | optional | Data source: e.g., SOURCE=rtmp://hostname:port/live/hks 2, particularly another map data driver also serves as a data source. |
| ACTION=action_nam e | optional | Action name: an optional parameter-void operation, e.g., ACTION=Start \| Stop. |
| METHOD=method_na me, parameter_value1,... | optional | Method name: an optional parameter-containing operation, e.g., METHOD=SetFrameSki ps, 4. |
| EXCEPTIONS= exception_format | optional | Exception format: a designated exception format, e.g., an exception format defined in WCS. |

Standard response: a document in an XML format is returned by default, and its content is completely the same as that returned through GetDriver, i.e., detailed dynamic description about a configured coverage data driver is returned.

Exception response: it may refer to the WCS standard.

The WDMS is a specific implementation of the Web Service. The Web Service consists of a Web Browser/Client, an HTTP server, a CGI program and a Dataset/Database. For the WDCS, the CGI program is a WDCS server. Particularly, the WDCS server at least includes a coverage data driver for dynamically updating the coverage data. In this way, through the WDCS protocol, the web browser/client requests the WDCS server to provide data or calls the specific coverage data driver to modify data, so as to dynamically modify the data and obtain the data source.

The WDCS provides an application assembly for the web dynamic coverage data service, and a core of the assembly is a WDCS server for the WDCS protocol. The WDCS server includes a Web request dispatcher, a coverage data driver, and a spatio-temporal data driver.

The Web request dispatcher takes charge of parsing a specific service type in the URL, an operation request, and a set of parameter key value pairs for the operation request, and issuing the request to a corresponding request processing module in accordance with the specific Web service type. After a response has been received from the request processing module, the Web request dispatcher further takes charge of transmitting a result to the client.

The coverage data driver takes charge of responding to a request with respect to its own running state, and independently requesting the spatio-temporal data driver to perform a reading/writing operation on the original data of designated coverage data in accordance with a service realized by the coverage data driver.

The spatio-temporal data driver takes charge of responding to a request for performing the reading/writing operation on the designated original coverage data, and a multi-process/multi-thread concurrent reading/writing mechanism must be ensured.

Preferably, the WDCS server is implemented on the basis of an open-source MapServer platform. A WDCSDispatcher with a WDCS protocol parsing capability is added as a Web request dispatcher. A self-developed ImageMosaicer is used as an optional coverage data driver. GDAL is used as an abstract data driver, so as to provide a cross-process data reading/writing mechanism.

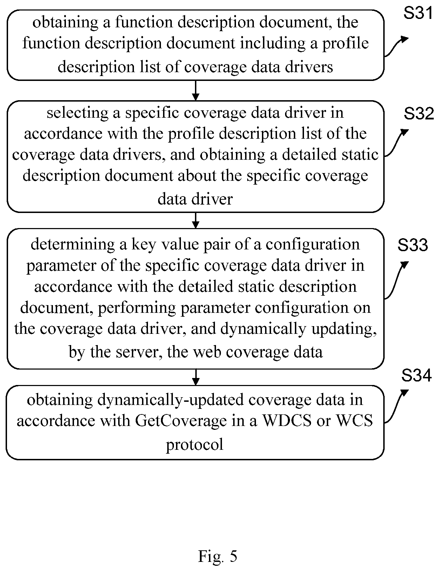

A specific implementation will be described as follows in conjunction with Fig. 5.

S31: obtaining a function description document. The function description document includes a profile description list of coverage data drivers. The profile description list must include a unique name of each coverage data driver, a metadata list and a list of unique identities of supported coverage data, and optionally includes a title, an abstract and a keyword list. Through the function description document, the client determines the drivers included in a current service, data corresponding to the drivers, and relevant information.

Through GetCapabilities in a WDCS protocol, a URL is created at a Web client, and a request is initiated to an HTTP server through an HTTP protocol. Upon the receipt of the request, the HTTP server initiates a request to the WDCS server through the URL for GetCapabilities transferred through a CGI protocol. The WDCS server parses the URL for GetCapabilities, so as to process the request.

Further, the request for GetCapabilities is processed in the WDCS server as follows.

At first, the Web request dispatcher (WDCSDispatcher) takes charge of parsing the URL for GetCapabilities to obtain a key value pair of a first request parameter, and checking whether a service protocol is WDCS.

Next, the WDCSDispatcher reads the first request parameter for GetCapabilities from a configuration file for a current map service.

Then, the WDCSDispatcher serializes the first request parameter for GetCapabilities into the function description document in an XML format by default.

Finally, the WDCSDispatcher transmits the function description document for GetCapabilities to the client.

The client obtains profile description list of the supported coverage data drivers from the function description document returned through GetCapabilities. The profile description list must include a unique name of each coverage data driver, the metadata list, and a list of unique names of supported coverage data, and optionally includes a title, an abstract and a keyword list. In this way, the client determines the drivers included in a current service, data corresponding to the drivers, and relevant information.

S32: selecting a specific coverage data driver in accordance with the profile description list of the coverage data drivers, and obtaining a detailed static description document about the specific coverage data driver. The detailed static description document must include a unique name of the coverage data driver, a metadata list, a supported operation, and a set of key value pairs of an operation parameter, and optionally includes a title, an abstract and a keyword list. A value of the key value pair is a default value. In this way, the client determines relevant information about the operation corresponding to the driver included in the current service.

A URL is created at the client in accordance with the profile description list of the specific coverage data driver and DescribeDriver in the WDCS protocol. A request is initiated to the HTTP server through an HTTP protocol. Upon the receipt of the request, the HTTP server initiates a request to the WDCS server through the URL for DescribeDriver transferred through a CGI protocol.

Further, the request for DescribeDriver is processed in the WDCS server as follows.

At first, the WDCSDispatcher parses a URL for DescribeDriver so as to obtain a key value pair of a second request parameter, and checks whether a service protocol is WDCS.

Next, the WDCSDispatcher reads a second parameter requested through DescribeDriver from a configuration file of a current feature service.

Next, the WDCSDispatcher serializes the second parameter, by default, into a detailed static description document of the coverage data driver in an XML format, i.e., a result of DescribeDriver.

Finally, the WDCSDispatcher transmits the detailed static description document of DescribeDriver to the client.

S33: determining a key value pair of a configuration parameter of the specific coverage data driver in accordance with the detailed static description document, performing parameter configuration on the coverage data driver, and dynamically updating, by the server, the web coverage data.

To be specific, a URL is created by the web coverage client in accordance with the detailed static description list and PutDriver in the WDCS protocol. A request is initiated by an HTTP server through an HTTP protocol. Upon the receipt of the request, the HTTP server initiates a request to the WDCS server through the URL for PutDriver transferred through a CGI protocol.

Further, the request for PutDriver is processed in the WDCS server as follows.

At first, the WDCSDispatcher parses the URL for PutDriver so as to obtain a key value pair of a third request parameter, and checks whether a service protocol is WDCS.

Next, the WDCSDispatcher configures the third request parameter designated through PutDriver into a specific coverage data driver, and starts the specific coverage data driver. The specific coverage data driver on which the configuration has been completed starts to run, and transmits a request for reading/writing the coverage data to the GDAL in an on-demand manner in accordance with its own service logic.

Finally, the GDAL responds to the request from the specific coverage data driver in accordance with its read/write locking mechanism, so as to dynamically update the original coverage data.

The operation PutDriver aims to configure the designated coverage data driver, and the standard response includes returning a document in an XML format by default, i.e., the detailed dynamic description about the configured coverage data driver.

S34: creating a URL at a client in accordance with the practical service requirement (e.g., a frequency of 25Hz) through GetCoverage in the WDCS or WCS protocol, and initiating a request to an HTTP server through an HTTP protocol. Upon the receipt of the request, the HTTP server initiates a request to the WDCS server through the URL for GetCoverage transferred through a CGI protocol.

Further, the request for GetCoverage is processed in the WDCS server as follows.

At first, the WDCSDispatcher parses the URL for GetCoverage so as to obtain a key value pair of a fourth request parameter, and checks whether a service protocol is WDCS or WCS.

Next, the WDCSDispatcher transmits a read-only request for the original vector data to the GDAL in accordance with the fourth request parameter for GetCoverage. The GDAL responds to the read-only request from the WDCSDispatcher in accordance with a global read-write locking mechanism, and returns the coverage data with respect to the fourth request parameter.

Finally, the WDCSDispatcher transmits the coverage data for GetCoverage to the client.

In a possible embodiment of the present disclosure, the client transmits a request for obtaining the coverage data driver to the server, and the server transmits detailed dynamic description document of the coverage data driver to the client. The detailed dynamic description document must include a unique name of the coverage data driver, a metadata list and an opened data source, so as to enable the client to determine the relevant information about the driver currently running for the current service.

### Fifth Embodiment

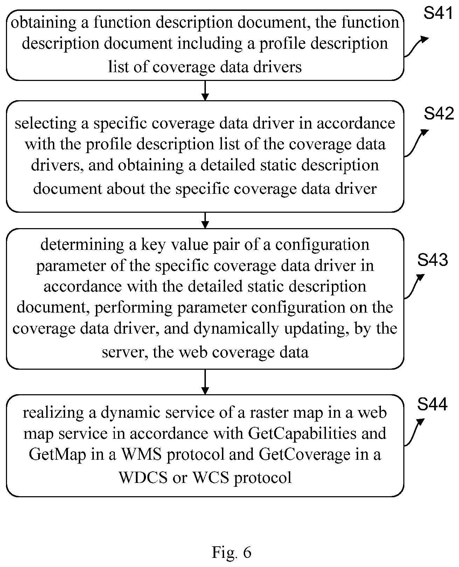

In this embodiment, a web dynamic coverage data service is realized through the combination of the WMS protocol and the WDCS protocol. A specific implementation will be described hereinafter in conjunction with Fig. 6.

S41: obtaining a function description document. The function description document includes a profile description list of coverage data drivers.

Through GetCapabilities in the WDCS protocol, a URL is created at a Web map client, and a request in initiated to an HTTP server through an HTTP protocol. Upon the receipt of the request, the HTTP server initiates a request to the WDCS server through the URL for GetCapabilities transferred through a CGI protocol. The WDCS server parses the URL for GetCapabilities, so as to process the request.

Further, the request for GetCapabilities is processed in the WDCS server as follows.

At first, the WDCSDispatcher takes charge of parsing the URL for GetCapabilities to obtain a key value pair of a first request parameter, and checking whether a service protocol is WDCS.

Next, the WDCSDispatcher reads the first request parameter for GetCapabilities from a configuration file for a current map service.

Then, the WDCSDispatcher serializes the first request parameter for GetCapabilities into the function description document in an XML format by default.

Finally, the WDCSDispatcher transmits the function description document for GetCapabilities to the client.

The client obtains a profile description list of the supported coverage data drivers from the function description document returned through GetCapabilities.

S42: selecting a specific coverage data driver in accordance with the profile description list of the coverage data drivers, and obtaining a detailed static description document about the specific coverage data driver. The detailed static description document must include a unique name of the coverage data driver, a metadata list, a supported operation, and a set of key value pairs of an operation parameter, and optionally includes a title, an abstract and a keyword list. A value of the key value pair is a default value. In this way, the client determines the relevant information about the operation corresponding to the driver in the current service.

A URL is created at the client in accordance with the profile description list of the specific coverage data drivers and DescribeDriver in the WDCS protocol. A request is initiated to the HTTP server through an HTTP protocol. Upon the receipt of the request, the HTTP server initiates a request to the WDCS server through the URL for DescribeDriver transferred through a CGI protocol.

Further, the request for DescribeDriver is processed in the WDCS server as follows.

At first, the WDCSDispatcher parses a URL for DescribeDriver so as to obtain a key value pair of a second request parameter, and checks whether a service protocol is WDCS.

Next, the WDCSDispatcher reads a second parameter requested through DescribeDriver from a configuration file of a current coverage service.

Next, the WDCSDispatcher serializes the second parameter, by default, into a detailed static description document of the coverage data driver in an XML format, i.e., a result of DescribeDriver.

Finally, the WDCSDispatcher transmits the detailed static description document of DescribeDriver to the client.

S43: determining a key value pair of a configuration parameter of the specific coverage data driver in accordance with the detailed static description document, performing parameter configuration on the coverage data driver, and dynamically updating, by the server, the web coverage data.

To be specific, a URL is created by the web coverage client in accordance with the detailed static description list and PutDriver in the WDCS protocol. A request is initiated by an HTTP server through an HTTP protocol. Upon the receipt of the request, the HTTP server initiates a request to the WDCS server through the URL for PutDriver transferred through a CGI protocol.

Further, the request for PutDriver is processed in the WDCS server as follows.

At first, the WDCSDispatcher parses the URL for PutDriver so as to obtain a key value pair of a third request parameter, and checks whether a service protocol is WDCS.

Next, the WDCSDispatcher configures a parameter designated through PutDriver into a specific coverage data driver, and starts the specific coverage data driver. The coverage data driver on which the configuration has been completed starts to run, and transmits a request for reading/writing the original vector data to the GDAL in an on-demand manner in accordance with its own service logic.

Finally, the GDAL responds to the request from the specific coverage data driver in accordance with its read/write locking mechanism, so as to dynamically update the original coverage data.

The operation PutDriver aims to configure the designated coverage data driver, and the standard response includes returning a document in an XML format by default, i.e., the detailed dynamic description about the configured coverage data driver.

S44: creating a URL at a web map client in accordance with GetCapabilities in the WMS protocol, and initiating a request to an HTTP server through an HTTP protocol. Upon the receipt of the request, the HTTP server initiates a request to the map server through the URL for GetCapabilities transferred through a CGI protocol. The WDCS server parses the URL for GetCapabilities, processes the request, and transmits a corresponding function description document to the client.

A URL is created at the WMS server in accordance with the practical service requirement through GetCoverage in the WDCS or WCS protocol, and initiating a request to an HTTP server through an HTTP protocol. Upon the receipt of the request, the HTTP server initiates a request to the WDCS server through the URL for GetCoverage transferred through a CGI protocol.

Further, the request for GetCoverage is processed in the WDCS server as follows.

At first, the WDCSDispatcher parses the URL for GetCoverage so as to obtain a key value pair of a fourth request parameter, checks whether a service protocol is WDCS or WCS, and transmits a read-only request for the original coverage data to the GDAL. The GDAL responds to the read-only request from the WDCSDispatcher in accordance with a global read-write locking mechanism, and returns the original coverage data with respect to the fourth request parameter.

Finally, the WDCSDispatcher transmits the original vector data for GetCoverage to the WMS server.

A URL is created at the web map client in accordance with the practical service requirement (e.g., at a frequency of 25Hz) through GetMap in the WMS protocol, and initiating a request to an HTTP server through an HTTP protocol. Upon the receipt of the request, the HTTP server initiates a request to the WMS server through the URL for GetMap transferred through a CGI protocol. The WMS server renders the coverage data from the WDCS server, and transmits the data requested through GetMap to the client. At this time, the client displays the coverage data in real time, so as to realize a dynamic service of a raster map I n the web map service.

## Claims

1. A method for realizing a web dynamic geographic information service, comprising:
transmitting, by a client, a request for describing a function to a web dynamic geographic information server, and transmitting, by the web dynamic geographic information server, a function description document to the client, the function description document comprising a profile description list of data drivers supported by the web dynamic geographic information server,
selecting, by the client, a specific data driver in accordance with the profile description list of the data drivers;
transmitting, by the client, a request for describing the specific data driver to the web dynamic geographic information server in accordance with the specific data driver, and transmitting, by the web dynamic geographic information server, a detailed static description document of the specific data driver to the client;
determining, by the client, a set of key value pairs of configuration parameters of the specific data driver in accordance with the detailed static description document, transmitting, by the client, a parameter configuration request to the web dynamic geographic information server in accordance with the set of key value pairs, performing, by the web dynamic geographic information server, parameter configuration on the specific data driver, and transmitting, by the web dynamic geographic information server, a detailed dynamic description document of the specific data driver to the client; and
dynamically updating, by the specific data driver on which the parameter configuration has been performed, original data, and transmitting, by the client, a request for reading data to the web dynamic geographic information server at a specific frequency so as to obtain data corresponding to the configuration parameters.

2. The method according to claim 1, wherein the transmitting, by the client, the request for describing the function to the web dynamic geographic information server, and transmitting, by the web dynamic geographic information server, the function description document to the client specifically comprises:
creating, by the client, a Uniform Resource Locator (URL) for an operation for obtaining the function description document, and initiating, by the client, a request to a server;
parsing, by the web dynamic geographic information server, the URL for the operation for obtaining the function description document, so as to obtain a key value pair of a first request parameter;
reading, by the web dynamic geographic information server, a first parameter requested through the operation for obtaining the function description document in a configuration file; and
serializing, by the web dynamic geographic information server, the first parameter into the function description document, and transmitting the function description document to the client.

3. The method according to claim 1, wherein the transmitting, by the client, the request for describing the specific data driver to the web dynamic geographic information server in accordance with the specific data driver, and transmitting, by the web dynamic geographic information server, the detailed static description document of the specific data driver to the client specifically comprises:
parsing, by the web dynamic geographic information server, a URL for an operation for describing the specific data driver, so as to obtain a key value pair of a second request parameter;
reading, by the web dynamic geographic information server, a second parameter requested by the operation for describing the specific data driver in a configuration file; and
serializing, by the web dynamic geographic information server, the second parameter into the detailed static description document, and transmitting the detailed static description document to the client.

4. The method according to claim 1, wherein the determining, by the client, the set of key value pairs of configuration parameters of the specific data driver in accordance with the detailed static description document, transmitting, by the client, the parameter configuration request to the web dynamic geographic information server in accordance with the set of key value pairs, performing, by the web dynamic geographic information server, parameter configuration on the specific data driver, and transmitting, by the web dynamic geographic information server, the detailed dynamic description document of the specific data driver to the client specifically comprises:
determining the key value pairs of the configuration parameters of the specific data driver in accordance with the detailed static description document, and transmitting a request for configuring the data drivers to the web dynamic geographic information server in accordance with the key value pairs of the configuration parameters of the specific data driver;
parsing, by the web dynamic geographic information server, an URL for an operation for configuring the data drivers so as to obtain a key value pair of a third request parameter;
configuring the third request parameter into the specific data driver in accordance with the key value pair of the third request parameter; and
transmitting the detailed dynamic description document of the specific data driver to the client.

5. The method according to claim 1, wherein the dynamically updating, by the specific data driver on which the parameter configuration has been performed, the original data, and transmitting, by the client, the request for reading data to the web dynamic geographic information server at a specific frequency so as to obtain the data corresponding to the configuration parameters specifically comprises:
transmitting, by the specific data driver on which the parameter configuration has been performed, a request for reading/writing the original data at a specific frequency; and
responding to the request for reading/writing the original data, and dynamically updating the original data.

6. The method according to claim 1, further comprising transmitting, by the client, a request for obtaining the data drivers to the web dynamic geographic information server, and transmitting, by the web dynamic geographic information server, detailed dynamic description documents of the data drivers to the client.

7. A device for realizing a web dynamic map service, comprising:
a web dynamic map server configured to process a request and transmit feedback information for realizing the web dynamic map service using the method according to any one of claims 1 to 6; and
a client configured to transmit a request to and receive the feedback information from the web dynamic map server.

8. The device according to claim 7, wherein the web dynamic geographic information server at least comprises a map data driver configured to dynamically update original data of a map.

9. A device for realizing a web dynamic feature service, comprising:
a web dynamic feature server configured to process a request and transmit feedback information for realizing a web dynamic feature service using the method according to any one of claims 1 to 6; and
a client configured to transmit a request to and receive the feedback information from the web dynamic feature server.

10. The device according to claim 9, wherein the web dynamic feature server at least comprises a feature data driver configured to dynamically update feature vector data.

11. A device for realizing a web dynamic coverage service, comprising:
a web dynamic coverage server configured to process a request and transmit feedback information for realizing a web dynamic feature service using the method according to any one of claims 1 to 6; and
a client configured to transmit a request to and receive the feedback information from the web dynamic coverage server.

12. The device according to claim 11, wherein the device for the web dynamic coverage service at least comprises a coverage data driver configured to dynamically update coverage data.

## Patentansprüche

1. Verfahren zum Realisieren eines Web-Dienstes für dynamische geografische Informationen, umfassend:
Übertragen einer Anfrage zum Beschreiben einer Funktion an einen Web-Server für dynamische geografische Informationen durch einen Client und Übertragen eines Funktionsbeschreibungsdokuments durch den Web-Server für dynamische geografische Informationen an den Client, wobei das Funktionsbeschreibungsdokument eine Profilbeschreibungsliste von Datentreibern umfasst, die vom Web-Server für dynamische geografische Informationen unterstützt werden;
Auswählen eines spezifischen Datentreibers durch den Client gemäß der Profilbeschreibungsliste der Datentreiber; Übertragen einer Anfrage zum Beschreiben des spezifischen Datentreibers durch den Client an den Web-Server für dynamische geografische Informationen gemäß dem spezifischen Datentreiber und Übertragen eines detaillierten statischen Beschreibungsdokuments des spezifischen Datentreibers durch den Web-Server für dynamische geografische Informationen an den Client;
Bestimmen eines Satzes von Schlüsselwertpaaren von Konfigurationsparametern des spezifischen Datentreibers durch den Client gemäß dem detaillierten statischen Beschreibungsdokument, Übertragen einer Parameterkonfigurationsanfrage an den Web-Server für dynamische geografische Informationen gemäß dem Satz von Schlüsselwertpaaren, Durchführen einer Parameterkonfiguration an dem spezifischen Datentreiber durch den Web-Server für dynamische geografische Informationen und Übertragen eines detaillierten dynamischen Beschreibungsdokuments des spezifischen Datentreibers durch den Web-Server für dynamische geografische Informationen an den Client; und
dynamisches Aktualisieren von Originaldaten durch den spezifischen Datentreiber, auf dem die Parameterkonfiguration durchgeführt wurde, und Übertragen einer Anfrage zum Lesen von Daten durch den Client an den Web-Server für dynamische geografische Informationen mit einer bestimmten Frequenz, um Daten zu erhalten, die den Konfigurationsparametern entsprechen.

2. Verfahren nach Anspruch 1, wobei das Übertragen der Anfrage zum Beschreiben der Funktion durch den Client an den Web-Server für dynamische geographische Informationen und das Übertragen des Funktionsbeschreibungsdokuments durch den Web-Server für dynamische geographische Informationen an den Client insbesondere Folgendes umfasst:
Erstellen eines Uniform Resource Locator (URL) für einen Vorgang zum Erhalten des Funktionsbeschreibungsdokuments durch den Client und Initiieren einer Anfrage an einen Server durch den Client;
Parsen der URL für den Vorgang zum Erhalten des Funktionsbeschreibungsdokuments durch den Web-Server für dynamische geografische Informationen, um ein Schlüsselwertpaar eines ersten Anfrageparameters zu erhalten;
Lesen eines ersten Parameters, der durch den Vorgang zum Erhalten des Funktionsbeschreibungsdokuments in einer Konfigurationsdatei angefordert wird, durch den Web-Server für dynamische geografische Informationen; und
Serialisieren des ersten Parameters in das Funktionsbeschreibungsdokument durch den Web-Server für dynamische geografische Informationen und Übertragen des Funktionsbeschreibungsdokuments an den Client.

3. Verfahren nach Anspruch 1, wobei das Übertragen der Anfrage zum Beschreiben des spezifischen Datentreibers durch den Client an den Web-Server für dynamische geografische Informationen gemäß dem spezifischen Datentreiber und das Übertragen des detaillierten statischen Beschreibungsdokuments des spezifischen Datentreibers durch den Web-Server für dynamische geografische Informationen an den Client insbesondere Folgendes umfasst:
Parsen einer URL für einen Vorgang zum Beschreiben des spezifischen Datentreibers durch den Web-Server für dynamische geografische Informationen, um ein Schlüsselwertpaar eines zweiten Anfrageparameters zu erhalten;
Lesen eines zweiten Parameters, der vom Vorgang zum Beschreiben des spezifischen Datentreibers in einer Konfigurationsdatei angefordert wird, durch den Web-Server für dynamische geografische Informationen; und
Serialisieren des zweiten Parameters in das Funktionsbeschreibungsdokument durch den Web-Server für dynamische geografische Informationen und Übertragen des detaillierten statischen Beschreibungsdokuments an den Client.

4. Verfahren nach Anspruch 1, wobei das Bestimmen des Satzes von Schlüsselwertpaaren von Konfigurationsparametern des spezifischen Datentreibers durch den Client gemäß dem detaillierten statischen Beschreibungsdokument, das Übertragen der Parameterkonfigurationsanfrage an den Web-Server für dynamische geografische Informationen durch den Client gemäß dem Satz von Schlüsselwertpaaren, das Durchführen einer Parameterkonfiguration an dem spezifischen Datentreiber durch den Web-Server für dynamische geografische Informationen und das Übertragen des detaillierten dynamischen Beschreibungsdokuments des spezifischen Datentreibers durch den Web-Server für dynamische geografische Informationen an den Client insbesondere Folgendes umfasst:
Bestimmen der Schlüsselwertpaare der Konfigurationsparameter des spezifischen Datentreibers gemäß dem detaillierten statischen Beschreibungsdokument und Übertragen einer Anfrage zum Konfigurieren der Datentreiber an den Web-Server für dynamische geografische Informationen gemäß den Schlüsselwertpaaren der Konfigurationsparameter des spezifischen Datentreibers;
Parsen einer URL für einen Vorgang zum Konfigurieren des Datentreibers durch den Web-Server für dynamische geografische Informationen, um ein Schlüsselwertpaar eines dritten Anfrageparameters zu erhalten;
Konfigurieren des dritten Anfrageparameters in den spezifischen Datentreiber gemäß dem Schlüsselwertpaar des dritten Anfrageparameters; und
Übertragen des detaillierten dynamischen Beschreibungsdokuments des spezifischen Datentreibers an den Client.

5. Verfahren nach Anspruch 1, wobei das dynamische Aktualisieren der Originaldaten durch den spezifischen Datentreiber, auf dem die Parameterkonfiguration durchgeführt wurde, und das Übertragen der Anfrage zum Lesen von Daten durch den Client an den Web-Server für dynamische geografische Informationen mit einer bestimmten Frequenz, um Daten zu erhalten, die den Konfigurationsparametern entsprechen, insbesondere Folgendes umfasst:
Übertragen einer Anfrage zum Lesen/Schreiben der Originaldaten mit einer bestimmten Frequenz durch den spezifischen Datentreiber, auf dem die Parameterkonfiguration durchgeführt wurde; und
Antworten auf die Anfrage zum Lesen/Schreiben der Originaldaten und dynamisches Aktualisieren der Originaldaten.

6. Verfahren nach Anspruch 1, das ferner das Übertragen einer Anfrage zum Erhalten des Datentreibers durch den Client an den Web-Server für dynamische geographische Informationen und das Übertragen von detaillierten dynamischen Beschreibungsdokumenten des Datentreibers durch den Web-Server für dynamische geographische Informationen an den Client umfasst.

7. Vorrichtung zum Realisieren eines Web-Dienstes für dynamische Karten, umfassend:
einen Web-Server für dynamische Karten, der so konfiguriert ist, dass er eine Anfrage verarbeitet und Feedback-Informationen zum Realisieren des Web-Dienstes für dynamische Karten unter Verwendung des Verfahrens nach einem der Ansprüche 1 bis 6 überträgt; und
einen Client, der so konfiguriert ist, dass er eine Anfrage an den Web-Server für dynamische Karten überträgt und die Feedback-Informationen von diesem empfängt.

8. Vorrichtung nach Anspruch 7, wobei der Web-Server für dynamische geografische Informationen mindestens einen Kartendatentreiber umfasst, der so konfiguriert ist, dass er Originaldaten einer Karte dynamisch aktualisiert.

9. Vorrichtung zum Realisieren eines dynamischen Web-Feature-Dienstes, umfassend:
einen dynamischen Web-Feature-Server, der so konfiguriert ist, dass er eine Anfrage verarbeitet und Feedback-Informationen zum Realisieren eines dynamischen Web-Feature-Dienstes unter Verwendung des Verfahrens nach einem der Ansprüche 1 bis 6 überträgt; und
einen Client, der so konfiguriert ist, dass er eine Anfrage an den dynamischen Web-Feature-Server überträgt und die Feedback-Informationen von diesem empfängt.

10. Vorrichtung nach Anspruch 9, wobei der dynamische Web-Feature-Server mindestens einen Merkmalsdatentreiber umfasst, der so konfiguriert ist, dass er Merkmalsvektordaten dynamisch aktualisiert.

11. Vorrichtung zum Realisieren eines dynamischen Web-Abdeckungsdienstes, umfassend:
einen dynamischen Web-Abdeckungsserver, der so konfiguriert ist, dass er eine Anfrage verarbeitet und Feedback-Informationen zum Realisieren eines dynamischen Web-Feature-Dienstes unter Verwendung des Verfahrens nach einem der Ansprüche 1 bis 6 überträgt; und
einen Client, der so konfiguriert ist, dass er eine Anfrage an den dynamischen Web-Abdeckungsserver überträgt und die Feedback-Informationen von diesem empfängt.

12. Vorrichtung nach Anspruch 11, wobei die Vorrichtung für den dynamischen Web-Abdeckungsdienst mindestens einen Abdeckungsdatentreiber umfasst, der so konfiguriert ist, dass er Abdeckungsdaten dynamisch aktualisiert..

## Revendications

1. Procédé de réalisation d'un service d'informations géographiques dynamiques Web, comportant :
la transmission, par un client, d'une demande de description d'une fonction à un serveur d'informations géographiques dynamiques Web, et la transmission, par le serveur d'informations géographiques dynamiques Web, d'un document de description de fonction au client, le document de description de fonction comportant une liste de description de profil de pilotes de données pris en charge par le serveur d'informations géographiques dynamiques Web ;
la sélection, par le client, d'un pilote de données spécifique conformément à la liste de description de profil des pilotes de données ;
la transmission, par le client, d'une demande de description du pilote de données spécifique au serveur d'informations géographiques dynamiques Web conformément au pilote de données spécifique, et la transmission, par le serveur d'informations géographiques dynamiques Web, d'un document de description statique détaillée du pilote de données spécifique au client ;
la détermination, par le client, d'un ensemble de paires clé-valeur de paramètres de configuration du pilote de données spécifique conformément au document de description statique détaillée, la transmission, par le client, d'une demande de configuration de paramètres au serveur d'informations géographiques dynamiques Web conformément à l'ensemble de paires clé-valeur, la réalisation, par le serveur d'informations géographiques dynamiques Web, de la configuration de paramètres sur le pilote de données spécifique, et la transmission, par le serveur d'informations géographiques dynamiques Web, d'un document de description dynamique détaillée du pilote de données spécifique au client ; et
la mise à jour dynamique, par le pilote de données spécifique sur lequel la configuration de paramètres a été réalisée, de données d'origine, et la transmission, par le client, d'une demande de lecture de données au serveur d'informations géographiques dynamiques Web à une fréquence spécifique de façon à obtenir des données correspondant aux paramètres de configuration.

2. Procédé selon la revendication 1, dans lequel la transmission, par le client, de la demande de description de la fonction au serveur d'informations géographiques dynamiques Web et la transmission, par le serveur d'informations géographiques dynamiques Web, du document de description de fonction au client comportent plus précisément :
la création, par le client, d'une adresse URL (Uniform Resource Locator) pour une opération d'obtention du document de description de fonction, et l'initiation, par le client, d'une demande à un serveur ;
l'analyse, par le serveur d'informations géographiques dynamiques Web, de l'URL pour l'opération d'obtention du document de description de fonction, de façon à obtenir une paire clé-valeur d'un premier paramètre de demande ;
la lecture, par le serveur d'informations géographiques dynamiques Web, d'un premier paramètre demandé par l'intermédiaire de l'opération d'obtention du document de description de fonction dans un fichier de configuration ; et
la sérialisation, par le serveur d'informations géographiques dynamiques Web, du premier paramètre dans le document de description de fonction, et la transmission du document de description de fonction au client.

3. Procédé selon la revendication 1, dans lequel la transmission, par le client, de la demande de description du pilote de données spécifique au serveur d'informations géographiques dynamiques Web conformément au pilote de données spécifique et la transmission, par le serveur d'informations géographiques dynamiques Web, du document de description statique détaillée du pilote de données spécifique au client comportent plus précisément :
l'analyse, par le serveur d'informations géographiques dynamiques Web, d'une URL pour une opération de description du pilote de données spécifique, de façon à obtenir une paire clé-valeur d'un deuxième paramètre de demande ;
la lecture, par le serveur d'informations géographiques dynamiques Web, d'un deuxième paramètre demandé par l'opération de description du pilote de données spécifique dans un fichier de configuration ; et
la sérialisation, par le serveur d'informations géographiques dynamiques Web, du deuxième paramètre dans le document de description statique détaillée, et la transmission du document de description statique détaillée au client.

4. Procédé selon la revendication 1, dans lequel la détermination, par le client, de l'ensemble de paires clé-valeur de paramètres de configuration du pilote de données spécifique conformément au document de description statique détaillée, la transmission, par le client, de la demande de configuration de paramètres au serveur d'informations géographiques dynamiques Web conformément à l'ensemble de paires clé-valeur, la réalisation, par le serveur d'informations géographiques dynamiques Web, de la configuration de paramètres sur le pilote de données spécifique et la transmission, par le serveur d'informations géographiques dynamiques Web, du document de description dynamique détaillée du pilote de données spécifique au client comportent plus précisément :
la détermination des paires clé-valeur des paramètres de configuration du pilote de données spécifique conformément au document de description statique détaillée, et la transmission d'une demande de configuration des pilotes de données au serveur d'informations géographiques dynamiques Web conformément aux paires clé-valeur des paramètres de configuration du pilote de données spécifique ;
l'analyse, par le serveur d'informations géographiques dynamiques Web, d'une URL pour une opération de configuration des pilotes de données de façon à obtenir une paire clé-valeur d'un troisième paramètre de demande ;
la configuration du troisième paramètre de demande dans le pilote de données spécifique conformément à la paire clé-valeur du troisième paramètre de demande ; et
la transmission au client du document de description dynamique détaillée du pilote de données spécifique.

5. Procédé selon la revendication 1, dans lequel la mise à jour dynamique, par le pilote de données spécifique sur lequel la configuration de paramètres a été réalisée, des données d'origine et la transmission, par le client, de la demande de lecture de données au serveur d'informations géographiques dynamiques Web à une fréquence spécifique de façon à obtenir les données correspondant aux paramètres de configuration comportent plus précisément :
la transmission, par le pilote de données spécifique sur lequel la configuration de paramètres a été réalisée, d'une demande de lecture/écriture des données d'origine à une fréquence spécifique ; et
la réponse à la demande de lecture/écriture des données d'origine, et la mise à jour dynamique des données d'origine.

6. Procédé selon la revendication 1, comportant en outre la transmission, par le client, d'une demande d'obtention des pilotes de données au serveur d'informations géographiques dynamiques Web, et la transmission, par le serveur d'informations géographiques dynamiques Web, de documents de description dynamique détaillée des pilotes de données au client.

7. Dispositif de réalisation d'un service de carte dynamique Web, comportant :
un serveur de carte dynamique Web configuré pour traiter une demande et transmettre des informations de rétroaction pour réaliser le service de carte dynamique Web en utilisant le procédé selon l'une quelconque des revendications 1 à 6 ; et
un client configuré pour transmettre une demande au serveur de carte dynamique Web et recevoir les informations de rétroaction en provenance de celui-ci.

8. Dispositif selon la revendication 7, dans lequel le serveur d'informations géographiques dynamiques Web comporte au moins un pilote de données de carte configuré pour mettre à jour dynamiquement des données d'origine d'une carte.

9. Dispositif de réalisation d'un service d'entités dynamiques Web, comportant :
un serveur d'entités dynamiques Web configuré pour traiter une demande et transmettre des informations de rétroaction pour réaliser un service d'entités dynamiques Web en utilisant le procédé selon l'une quelconque des revendications 1 à 6 ; et
un client configuré pour transmettre une demande au serveur d'entités dynamiques Web et recevoir les informations de rétroaction en provenance de celui-ci.

10. Dispositif selon la revendication 9, dans lequel le serveur d'entités dynamiques Web comporte au moins un pilote de données d'entités configuré pour mettre à jour dynamiquement des données de vecteur de caractéristiques.

11. Dispositif de réalisation d'un service de couverture dynamique Web, comportant :
un serveur de couverture dynamique Web configuré pour traiter une demande et transmettre des informations de rétroaction pour réaliser un service de couverture dynamique Web en utilisant le procédé selon l'une quelconque des revendications 1 à 6 ; et
un client configuré pour transmettre une demande au serveur de couverture dynamique Web et recevoir les informations de rétroaction en provenance de celui-ci.

12. Dispositif selon la revendication 11, dans lequel le dispositif pour le service de couverture dynamique Web comporte au moins un pilote de données de couverture configuré pour mettre à jour dynamiquement des données de couverture.
